# EUROPEAN PATENT APPLICATION

(11) **EP 4 697 762 A1**
(43) Date of publication of application: **18.02.2026**
(21) Application number: 24802769.0
(22) Date of filing: 24.04.2024
(51) Int. Cl.: H04W 4/38

(54) **SENSING METHOD AND COMMUNICATION APPARATUS**

(30) Priority: 06.05.2023 CN 202310506186
(71) Applicant: Huawei Technologies Co., Ltd., Shenzhen, Guangdong 518129 (CN)
(72) Inventor: YING, Jiangwei, Shenzhen, Guangdong 518129 (CN); SHAO, Jiafeng, Shenzhen, Guangdong 518129 (CN)
(74) Representative: Pfenning, Meinig & Partner mbB
(86) International application number: PCT/CN2024/089525
(87) International publication number: WO 2024/230484

(57) **Abstract**

Embodiments of this application provide a sensing method and a communication apparatus. The method includes: A second network element receives a first request message from a first network element, where the first request message is used to request a first sensing service. The second network element determines a first sensing task matching the first sensing service, where the first sensing task is a sensing task executed by a third network element. The second network element receives sensing measurement data from the third network element, where the sensing measurement data is obtained based on the first sensing task. The second network element obtains a sensing result of the first sensing service based on the sensing measurement data. According to the sensing method and the communication apparatus provided in embodiments of this application, signaling interaction overheads or data transmission and processing overheads of a sensing function network element or a sensing device network element can be reduced.

## Description

This application claims priority to Chinese Patent Application No. 202310506186.7, filed with the China National Intellectual Property Administration on May 6, 2023 and entitled "SENSING METHOD AND COMMUNICATION APPARATUS", which is incorporated herein by reference in its entirety.

### TECHNICAL FIELD

Embodiments of this application relate to the communication sensing field, and more specifically, to a sensing method and a communication apparatus.

### BACKGROUND

A wireless sensing technology (or referred to as a non-sensor scenario sensing technology) is to obtain a characteristic of a signal propagation space (channel) by analyzing a change of a radio signal in a propagation process, to implement scenario sensing.

With evolution of communication technologies, a sensing capability is derived from a communication frequency band, especially a millimeter-wave frequency band. When a base station or a terminal has a sensing capability, a communication system may perform sensing and recognition on a particular area, a particular object, a particular event, or the like. An ultra-high sensing capability can be achieved by using advantages such as wide coverage, long coverage, large bandwidth, high precision, and low latency in a communication network. If this sensing capability is used as a new capability in the communication network, sensing demands in many scenarios can be met.

However, when a sensing detection service is executed, transmission of a large amount of sensing measurement data or signaling interaction needs to be performed between a sensing function network element and a sensing device network element, and the sensing function network element needs to process a large amount of data, causing high overheads.

### SUMMARY

Embodiments of this application provide a sensing method and a communication apparatus, to reduce sensing measurement data transmission and processing overheads or signaling interaction overheads between a sensing function network element and a sensing device network element.

According to a first aspect, a sensing method is provided, including: A second network element receives a first request message from a first network element. The first request message is used to request a first sensing service. The second network element determines a first sensing task matching the first sensing service. The first sensing task is a sensing task executed by a third network element. The second network element receives sensing measurement data from the third network element. The sensing measurement data is obtained based on the first sensing task. The second network element obtains a sensing result of the first sensing service based on the sensing measurement data.

The second network element may be a sensing control device, for example, may be a sensing function network element SF. Optionally, a control plane and a user plane of the SF may be separated. In other words, an SF control plane (SF control plane, SF-C) function and an SF user plane (SF user plane, SF-U) function are separated. An SF-C may send control signaling, for example, a sensing control request (a first control message), to a sensing device by using the control plane. An SF-U may receive sensing measurement data from the sensing device by using a data plane, and optionally process the sensing measurement data, to obtain a sensing result. The SF-C may control the SF-U. For example, the SF-C may select a proper SF-U, and configure one or more configurations of a recognition rule, a processing rule, or a routing rule of the sensing measurement data for the SF-U.

Optionally, the SF may be a location management function (location management function, LMF) network element; or an SF function is a part of an LMF function; or the SF and the LMF may be co-deployed.

The first network element may be a demander or a requester of a sensing service, for example, may be an application server, a client, an application function network element, a terminal device, or an internal network element. The internal network element may include a base station, an access and mobility management function (access and mobility management, AMF) network element, the LMF, or the like. The third network element may be a sensing device network element (sensing execution device), for example, may be a base station or a terminal device.

The first sensing task may be a sensing operation, sensing detection, a sensing service, or the like that is being performed by the third network element.

In this embodiment, after receiving a message for requesting the first sensing service by the first network element, the second network element may match the first sensing service with a first sensing task being executed by the third network element, so that data of the first sensing task may be used for both the first sensing service and another sensing service matched with the first sensing task. Because the second network element matches the first sensing service with the first sensing task being executed, for example, signaling interaction overheads required for establishing a data transmission channel may be reduced. In addition, if a sensing requirement of the first sensing task meets a sensing requirement of the first sensing service, the second network element may not need to send a sensing control message (including the sensing requirement of the first sensing service) for the first sensing service, but directly determine the first sensing task matching the first sensing service. When the third network element periodically or aperiodically reports sensing measurement data of the first sensing task (the sensing measurement data may be directly obtained by performing the sensing operation by the third network element, or may be obtained by further processing directly obtained data by the third network element), the second network element may directly obtain the sensing result of the first sensing service from the sensing measurement data. During matching, reference may be made to, for example, at least one parameter in the sensing requirement of the first sensing service, the sensing requirement of the first sensing task, and first information.

The second network element may analyze the sensing measurement data. If a sensing object corresponding to the sensing measurement data does not include a target object, the second network element may not send the sensing result to the first network element after obtaining the sensing result, thereby reducing signaling and data transmission overheads. Certainly, the second network element may alternatively feed back to the first network element that no target object is found. If a sensing object corresponding to the sensing measurement data includes a target object, the second network element may feed back the sensing result to the first network element after obtaining the sensing result. The target object is an object that the first sensing service intends to find, for example, an overspeed vehicle in vehicle overspeed detection. The sensing result may be data obtained by the second network element through further processing based on the sensing measurement data, or may be the sensing measurement data.

Alternatively, the third network element may preliminarily analyze the sensing measurement data. If the third network element determines that the sensing object corresponding to the sensing measurement data does not include the target object, the third network element may send the sensing measurement data to the second network element. After processing the sensing measurement data, the second network element determines that the target object is not found, and may not feed back the sensing result to the first network element. Optionally, the third network element may send the sensing measurement data and the indication information indicates that the sensing object corresponding to the sensing measurement data does not include the target object. In this case, the second network element may not process the sensing measurement data based on the indication information, thereby reducing data processing overheads of the second network element.

Optionally, after determining that the sensing object corresponding to the sensing measurement data does not include the target object, the third network element may not send the sensing measurement data to the second network element, thereby reducing data transmission overheads between the second network element and the third network element.

With reference to the first aspect, in some implementations of the first aspect, the first request message includes a sensing requirement of the first sensing service, and that the second network element determines the first sensing task matching the first sensing service includes: The second network element determines, based on a sensing requirement of the first sensing task and the sensing requirement of the first sensing service, the first sensing task matching the first sensing service.

With reference to the first aspect, in some implementations of the first aspect, the sensing requirement of the first sensing service includes at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner; and/or the sensing requirement of the first sensing task includes at least one of the following: first sensing task precision, first sensing task resolution, a first sensing task refresh rate, a first sensing task delay, a first sensing task detection rate, a first sensing task false alarm rate, a first sensing task missed detection rate, a first sensing task confidence, a first sensing task area, first sensing task time information, a first sensing task speed range, a first sensing task location point, a first sensing task distance, a first sensing task priority, a first sensing task dimension indication, and a first sensing task feedback manner.

A refresh rate may also be referred to as a frame rate. To be specific, the first sensing service refresh rate may be referred to as a first sensing service frame rate, and the first sensing task refresh rate may be referred to as a first sensing task frame rate.

When determining the first sensing task matching the first sensing service, the second network element may refer to the sensing requirement of the first sensing task and the sensing requirement of the first sensing service. For example, the second network element may select, based on sensing requirements of a plurality of sensing tasks, a sensing task that meets the sensing requirement of the first sensing service from the plurality of sensing tasks. If the sensing requirement of the first sensing task meets the sensing requirement of the first sensing service, the second network element determines the first sensing task from a plurality of sensing tasks executed by a plurality of sensing device network elements. For another example, if the second network element determines that none of sensing tasks executed by the plurality of sensing device network elements meets the sensing requirement of the first sensing service, the second network element may determine that a first sensing task whose sensing requirement is close to the sensing requirement of the first sensing service is the first sensing task matching the first sensing service. For example, if only a feedback periodicity in the sensing task feedback manner is greater than a feedback periodicity of the sensing requirement of the first sensing service, and all the other metrics of the first sensing task meet the sensing requirement of the first sensing service, the second network element may increase the feedback periodicity of the first sensing task to meet the sensing requirement of the first sensing service, and match the first sensing service with the first sensing task.

With reference to the first aspect, in some implementations of the first aspect, that the second network element determines, based on the sensing requirement of the first sensing task and the sensing requirement of the first sensing service, the first sensing task matching the first sensing service includes: The second network element determines, based on the sensing requirement of the first sensing task, the sensing requirement of the first sensing service, and first information, the first sensing task matching the first sensing service. The first information includes at least one of the following: capability information of at least one sensing device network element, where the at least one sensing device network element includes the third network element, sensing data processing experience information of the second network element, and assistance information related to the first sensing service; the capability information of the at least one sensing device network element includes at least one of the following: an available sensing resource, supportable sensing precision, supportable sensing resolution, a supportable sensing distance, a supportable sensing angle, a supportable sensing area, a supportable sensing speed range, an available processing capability, and a hardware configuration of each of the at least one sensing device network element; the sensing data processing experience information of the second network element includes at least one of the following: a detection rate, a missed detection rate, a false alarm rate, and a confidence that correspond to a historical sensing result; and the assistance information related to the first sensing service includes at least one of the following: sensing area related information of the first sensing service, sensing object information of the first sensing service, sensing time related information of the first sensing service, and purpose information of the first sensing service.

When determining the first sensing task matching the first sensing service, the second network element may further refer to the first information. The first information may include at least one of the following: the capability information of the at least one sensing device network element, the sensing data processing experience information of the second network element, and the assistance information related to the first sensing service. By referring to the first information, the second network element can better determine a sensing task matching the first sensing service, and can also better determine update values of all metrics in the sensing requirement of the first sensing task, thereby minimizing signaling interaction with the third network element and reducing a burden of performing the sensing operation by the third network element.

With reference to the first aspect, in some implementations of the first aspect, metrics in the sensing requirement of the first sensing task meet metrics in the sensing requirement of the first sensing service.

In this embodiment, if the metrics in the sensing requirement of the first sensing task meet the metrics in the sensing requirement of the first sensing service, after determining the first sensing task, the second network element does not need to send the sensing control message to the third network element. The third network element may execute the first sensing task based on a previous sensing requirement, and report the sensing measurement data. After the third network element reports the sensing measurement data of the first sensing task, the second network element determines the sensing result of the first sensing service based on the sensing measurement data. If the sensing result indicates that the sensing object corresponding to the sensing measurement data includes the target object, the sensing result may be returned to the first network element.

With reference to the first aspect, in some implementations of the first aspect, metrics in the sensing requirement of the first sensing task meet metrics in the sensing requirement of the first sensing service, and the second network element does not need to send the sensing control message to the third network element for the first sensing service, but returns the sensing result of the first sensing service to the first network element based on the sensing measurement data reported by the third network element.

With reference to the first aspect, in some implementations of the first aspect, if a part or all of metrics in the sensing requirement of the first sensing task do not meet a part or all of metrics in the sensing requirement of the first sensing service, the method further includes: The second network element updates the sensing requirement of the first sensing task. An updated sensing requirement of the first sensing task meets the sensing requirement of the first sensing service. The second network element sends the updated sensing requirement of the first sensing task to the third network element, so that the third network element performs a sensing operation based on the updated sensing requirement of the first sensing task and obtains the sensing measurement data.

In this embodiment, if a part or all of the metrics in the sensing requirement of the first sensing task do not meet a part or all of the metrics in the sensing requirement of the first sensing service, the second network element may update a part or all of the metrics in the sensing requirement of the first sensing task, so that the sensing requirement of the first sensing task meets the sensing requirement of the first sensing service. In this case, the second network element needs to send the updated sensing requirement of the first sensing task to the sensing device, so that the sensing device performs the sensing operation based on the updated sensing requirement.

Optionally, if the second network element does not find, in sensing tasks being executed, a sensing task that can match the first sensing service, the second network element may create a new first sensing task, and determine the sensing requirement of the first sensing task based on the sensing requirement of the first sensing service. In other words, in this case, the first sensing task is not a sensing task being executed but a new sensing task created by the third network element.

With reference to the first aspect, in some implementations of the first aspect, the first request message further includes service description information of the first sensing service.

In this embodiment, when requesting the first sensing service, the first network element may use the first request message to carry the service description information of the first sensing service. The service description information of the first sensing service may include, for example, a speed limit value of vehicle overspeed detection, and location range information of an emergency lane in emergency lane occupation detection. The second network element can determine, based on the service description information of the first sensing service, whether to perform further sensing processing. For example, for an object tracking service, when obtaining the target object based on the reported sensing measurement data, the second network element triggers the sensing device to track the target object. Optionally, the second network element may further trigger update of a sensing parameter and notify the sensing device, to obtain sensing measurement data that meets a tracking service requirement.

With reference to the first aspect, in some implementations of the first aspect, a sensing object corresponding to the sensing measurement data includes a target object of the first sensing service, and the method further includes: The second network element determines a sensing measurement data requirement of the first sensing service based on the service description information. The sensing measurement data requirement includes a point cloud information requirement and operation information of the target object, the point cloud information requirement of the target object includes at least one of the following: a scattering point location range, a scattering point speed range, a scattering point direction range, a scattering point size, scattering point contour information, and scattering point intensity information, and the operation information includes at least one of the following: target tracking, target recognition, target contour delineation, target collision avoidance recognition, and recognition of entry of a target to a specific area or location. The second network element sends the sensing measurement data requirement to the third network element, so that the third network element obtains the sensing measurement data based on the sensing measurement data requirement.

When the second network element does not need to update the sensing requirement of the first sensing task, the sensing measurement data requirement may be separately sent to the third network element. When the second network element updates the sensing requirement of the first sensing task, the sensing measurement data requirement and the updated sensing requirement of the first sensing task may be sent to the third network element together. If the third network element may execute or has executed a plurality of sensing tasks simultaneously, the second network element needs to notify the third network element of a specific sensing task matched with the sensing service corresponding to the sensing measurement data requirement, for example, indicating, based on the indication information, the sensing task that matches the sensing measurement data requirement.

In this embodiment, after receiving the first request message, the second network element determines the sensing measurement data requirement of the first sensing service based on the service description information carried in the first request message, and sends the sensing measurement data requirement to the third network element after matching the first sensing service with the first sensing task. Therefore, after performing the sensing operation based on the sensing requirement of the first sensing service to obtain the sensing measurement data, the third network element may analyze the sensing measurement data. If the sensing object corresponding to the sensing measurement data includes the target object, the sensing parameter may be independently adjusted to perform a further sensing operation on the target object. For example, parameters such as a sensing beam width, a sensing power, and a scanning periodicity are adjusted, to perform target tracking, target recognition, or target contour delineation on the target object. In this way, further sensing on the target object is independently performed by the third network element based on analysis of the first sensing measurement data, and the second network element does not need to analyze the first sensing measurement data and indicate the first sensing measurement data through signaling, thereby reducing signaling overheads between the second network element and the third network element.

In an embodiment of this application, a first sensing operation is performed by the third network element based on a first sensing parameter, and the second sensing operation is performed by the third network element based on a second sensing parameter. The method further includes: The third network element determines the first sensing parameter based on the sensing requirement of the first sensing service. The first sensing parameter is lower than the sensing requirement of the first sensing service. The third network element determines the second sensing parameter based on the sensing requirement of the first sensing service. The second sensing parameter meets the sensing requirement of the first sensing service.

In other words, to obtain the target object as soon as possible, sensing may be performed in a large area range based on, for example, low sensing precision and resolution during the first sensing operation, to save sensing resources and find the target object as soon as possible. After it is determined that the target object exists, further sensing may be performed on the target object based on the sensing requirement of the first sensing service and a sensing parameter that meets the sensing requirement. For example, target tracking, target contour delineation, or target recognition is performed on the target object.

It should be understood that, in the technical solutions in this embodiment of this application, the third network element is not limited to adjusting the sensing parameter for only one time. For example, the third network element may adjust the sensing parameter for a plurality of times, to obtain the sensing measurement data that meets the sensing requirement.

If the sensing object corresponding to the sensing measurement data does not include the target object, the sensing measurement data may not be sent to the second network element, thereby reducing data exchange between the second network element and the third network element and data processing overheads of the third network element. Optionally, the third network element may send the sensing measurement data to the second network element, but may notify the second network element in various manners that the sensing object corresponding to the sensing measurement data does not include the target object, for example, perform an indication based on the indication information. In this way, the second network element does not need to process and analyze the data after receiving the sensing measurement data, thereby reducing data processing overheads of the second network element.

With reference to the first aspect, in some implementations of the first aspect, the method further includes: The second network element receives first indication information from the third network element. The first indication information indicates that a sensing object corresponding to the sensing measurement data includes the target object. That the second network element obtains the sensing result of the first sensing service based on the sensing measurement data includes: The second network element obtains the sensing result based on the first indication information and the sensing measurement data.

In this embodiment, if the third network element sends the sensing measurement data to the second network element regardless of whether the sensing object corresponding to the sensing measurement data includes the target object, the indication information may indicate whether the sensing object corresponding to the sensing measurement data includes the target object. If the sensing object includes the second network element, the second network element parses the data to obtain the sensing result; or if the sensing object does not include the target object, the second network element may not need to parse the data or send the sensing result, thereby reducing data processing and signaling interaction overheads of the second network element.

According to a second aspect, a sensing method is provided, including: A second network element receives a first request message from a first network element. The first request message is used to request a first sensing service, and the first request message includes a sensing requirement of the first sensing service and service description information of the first sensing service. The second network element determines a sensing measurement data requirement of the first sensing service based on the service description information. The sensing measurement data requirement includes a point cloud information requirement and operation information of the target object, the point cloud information requirement of the target object includes at least one of the following: a scattering point location range, a scattering point speed range, a scattering point direction range, a scattering point size, scattering point contour information, and scattering point intensity information, and the operation information includes at least one of the following: target tracking, target recognition, target contour delineation, target collision avoidance recognition, and recognition of entry of a target to a specific area or location. The second network element sends a first control message to a third network element. The first control message is used to request the third network element to perform a sensing operation, and the first control message includes the sensing measurement data requirement and the sensing requirement of the first sensing service.

The target recognition may include: determining whether there is the target object, determining a quantity of target objects, and determining a size of the target object. The service description information may include a service type and requirement information for the target object. The requirement information for the target object may be, for example, a speed limit value in vehicle overspeed detection.

The second network element converts the service description information (the service description information may include the service type) of the first sensing service requested by the first network element into a sensing measurement data requirement that can be understood and further processed by a sensing device network element (the third network element), and sends the sensing measurement data requirement and the sensing requirement of the first sensing service to the third network element, so that the third network element can determine, based on the sensing measurement data requirement by parsing the sensing measurement data, that the target object exists, and then can independently adjust the sensing parameter to perform a further sensing operation on a sensing object. In this way, the second network element does not need to indicate, through signaling, the third network element to perform further sensing.

Further, to reduce consumption of sensing resources, the third network element may perform sensing based on a low sensing requirement at the beginning, for example, perform sensing by using a wide beam, to determine the sensing object in a large sensing range as soon as possible. After the sensing measurement data is analyzed and it is determined that the target object exists, further sensing may be performed on the target object based on a sensing parameter that meets the sensing requirement of the first sensing service.

With reference to the second aspect, in some implementations of the second aspect, the method further includes: The second network element receives sensing measurement data from the third network element. The sensing measurement data is obtained by the third network element by performing the sensing operation based on the sensing requirement of the first sensing service. The second network element obtains a sensing result based on the sensing measurement data.

The sensing measurement data may be data directly obtained by the third network element by performing the sensing operation, or may be data obtained by further processing obtained data after the third network element performs the sensing operation. The sensing measurement data may be sensing measurement data obtained by the third network element by performing one sensing operation for the first sensing service, or may be sensing measurement data obtained by the third network element by performing a plurality of sensing operations for the first sensing service. For example, after receiving the sensing measurement data requirement and the sensing requirement of the first sensing service that are sent by the second network element, the third network element performs one sensing operation and obtains the first sensing measurement data. The third network element may analyze the first sensing measurement data and determine whether the sensing object corresponding to the first sensing operation includes the target object. If the target object is included and the sensing requirement of the first sensing service is met, the data may be directly reported to the second network element. If the target object is included but the sensing requirement of the first sensing service is not met, the third network element may subsequently adjust the sensing parameter for at least one time, to obtain sensing measurement data that meets the sensing service requirement. The third network element may report data of a last sensing operation to the second network element, or may send sensing measurement data of all sensing operations to the second network element, so that the second network element provides the sensing result to the first network element. If the target object corresponding to the first sensing measurement data does not include the target object, the third network element may send the first sensing measurement data to the second network element, or may not send the first sensing measurement data to the second network element, thereby reducing data processing overheads of the second network element.

If the sensing object corresponding to the sensing measurement data includes the target object of the first sensing service, the second network element may return the sensing result to the first network element. The sensing result may be a result of further processing performed by the second network element based on the received sensing measurement data, or may be the sensing measurement data received by the second network element.

With reference to the second aspect, in some implementations of the second aspect, the method further includes: The second network element receives first indication information from the third network element. The first indication information indicates whether a sensing object corresponding to the sensing measurement data includes the target object. That the second network element obtains the sensing result based on the sensing measurement data includes: if the first indication information indicates that the sensing object corresponding to the sensing measurement data includes the target object, the second network element obtains the sensing result based on the sensing measurement data; and the method further includes: the second network element returns the sensing result of the first sensing service to the first network element.

Optionally, if the first indication information indicates that the sensing object corresponding to the sensing measurement data does not include the target object, the second network element does not process the sensing measurement data.

In this embodiment, because the third network element preliminarily processes the sensing measurement data of the first sensing service and determines whether the target object is obtained, when the sensing measurement data is sent to the second network element, the first indication information indicates whether the sensing object corresponding to the sent sensing measurement data includes the target object. The second network element may determine, based on the indication information, whether to parse the sensing measurement data and return the sensing result to the third network element. If the target object is included, the sensing measurement data may be parsed and the sensing result is returned to the first network element. If the target object is not included, the second network element may not further analyze or process the sensing measurement data, thereby reducing a data processing amount of the second network element.

The first indication information and the sensing measurement data may be sent in a same message, or may be sent separately, for example, sent in a fixed resource, so that the third network element can determine, based on a correspondence between the sensing measurement data and a sending resource of the first indication information, the sensing measurement data indicated by the first indication information.

Optionally, the first indication information may be used for indication only when the sensing object corresponding to the sensing measurement data includes the target object, and the first indication information is not used for indication when the target object is not included, so that the second network element can determine, based on whether the first indication information exists, whether to parse and process the sensing measurement data.

With reference to the second aspect, in some implementations of the second aspect, the sensing requirement of the first sensing service includes at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner.

According to a third aspect, a sensing method is provided, including: A third network element receives a first control message from a second network element. The first control message includes a sensing requirement of a first sensing service and a sensing measurement data requirement of the first sensing service, the sensing measurement data requirement of the first sensing service includes a point cloud information requirement and operation information of a target object of the first sensing service, the point cloud information requirement of the target object includes at least one of the following: a scattering point location range, a scattering point speed range, a scattering point direction range, a scattering point size, scattering point contour information, and scattering point intensity information, and the operation information includes at least one of the following operations on the target object: target tracking, target recognition, target contour delineation, target collision avoidance recognition, and recognition of entry of a target to a specific area or location. The third network element performs a first sensing operation based on the first control message, and obtains first sensing measurement data. The third network element determines whether a sensing object corresponding to the first sensing measurement data includes the target object. If the sensing object corresponding to the first sensing measurement data includes the target object and the first sensing measurement data does not meet the sensing requirement of the first sensing service: the third network element adjusts a sensing parameter, performs a second sensing operation on the target object, and obtains second sensing measurement data. The third network element sends the second sensing measurement data to the second network element. Alternatively, if the sensing object corresponding to the first sensing measurement data includes the target object and the first sensing measurement data meets the sensing requirement of the first sensing service: the third network element sends the first sensing measurement data to the second network element.

The sensing measurement data requirement of the first sensing service is a requirement that can be understood and processed by the third network element. After receiving the sensing measurement data requirement of the first sensing service, the third network element may perform preliminary processing and analysis on the first sensing measurement data obtained by performing the first sensing operation, and determine, based on an analysis result, whether a sensing parameter needs to be adjusted and further sensing needs to be performed. In this way, the second network element does not need to indicate the third network element to perform a subsequent sensing operation on the target object, thereby reducing signaling interaction between the second network element and the third network element.

When the sensing object corresponding to the first sensing measurement data obtained by the third network element by performing the first sensing operation includes the target object, the third network element can independently adjust the sensing parameter and performs further sensing on the target object, to reduce signaling consumption caused by analyzing the sensing measurement data by the second network element. The third network element may send, to the second network element, the second sensing measurement data obtained through further sensing, so that the second network element obtains a sensing result based on the second sensing measurement data, and returns the sensing result to the first network element.

Optionally, the third network element may be not limited to adjusting the sensing parameter for only one time, but may adjust the sensing parameter for a plurality of times, to obtain the sensing measurement data that meets the sensing requirement of the first sensing service.

When the sensing object corresponding to the first sensing measurement data does not include the target object, the third network element may still send the first sensing measurement data to the second network element, so that the second network element performs subsequent processing. Alternatively, the third network element may not process the first sensing measurement data, in other words, does not send the first sensing measurement data to the second network element, thereby reducing overheads of data transmission or signaling interaction between the second network element and the third network element.

With reference to the third aspect, in some implementations of the third aspect, that the third network element determines whether the sensing object corresponding to the first sensing measurement data includes the target object includes: The third network element determines, based on whether the sensing object corresponding to the first sensing measurement data includes a sensing object whose scattering point meets the point cloud information requirement, whether the sensing object corresponding to the first sensing measurement data includes the target object.

In this embodiment, the third network element determines the target object based on the sensing measurement data requirement sent by the second network element, and a scattering point corresponding to the target object meets the point cloud information requirement.

With reference to the third aspect, in some implementations of the third aspect, the method further includes: The third network element sends first indication information to the second network element. The first indication information indicates that a sensing object corresponding to the second sensing measurement data includes the target object.

The indication information and the sensing measurement data transmitted to the second network element may be sent in one message or not in one message. After receiving the indication information, the second network element needs to be capable of determining the sensing measurement data indicated by the indication information.

The third network element indicates, based on the indication information, that the sensing object corresponding to the second sensing measurement data includes the target object. In this case, the second network element may parse the second sensing measurement data, and return the sensing result to the first network element.

Optionally, the third network element may indicate, based on the indication information, that the sensing object corresponding to the sensing measurement data sent to the second network element does not include the target object. In this case, the second network element may not parse or process the sensing measurement data, thereby reducing data processing overheads of the second network element.

With reference to the third aspect, in some implementations of the third aspect, the sensing parameter includes at least one of the following: a sensing bandwidth, a transmit power, a beam width, a beam direction, and a scanning periodicity parameter. Sensing parameters used for the first sensing operation and the second sensing operation meet at least one of the following: a transmit power used for the first sensing operation is less than a transmit power used for the second sensing operation; a beam width used for the first sensing operation is greater than a beam width used for the second sensing operation; and a scanning periodicity used for the first sensing operation is greater than a scanning periodicity used for the second sensing operation.

The third network element may perform further sensing on the target object by increasing a sensing power, reducing a bandwidth used for sensing, or reducing a scanning periodicity (that is, increasing a scanning frequency), thereby reducing signaling overheads caused when the second network element indicates the third network element to perform further sensing.

With reference to the third aspect, in some implementations of the third aspect, the sensing requirement of the first sensing service includes at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner.

According to a fourth aspect, a communication apparatus is provided, and includes a module or a unit configured to perform the method in the first aspect or any possible implementation of the first aspect. The module or unit may be a hardware circuit, or may be software, or may be implemented by a hardware circuit in combination with software.

According to a fifth aspect, a communication apparatus is provided, and includes a module or a unit configured to perform the method in the second aspect or any possible implementation of the second aspect. The module or unit may be a hardware circuit, or may be software, or may be implemented by a hardware circuit in combination with software.

According to a sixth aspect, a communication apparatus is provided, and includes a module or a unit configured to perform the method in the third aspect or any possible implementation of the third aspect. The module or unit may be a hardware circuit, or may be software, or may be implemented by a hardware circuit in combination with software.

According to a seventh aspect, a system is provided, including the communication apparatus according to the fourth aspect, or including the communication apparatus according to the fifth aspect and the sixth aspect.

According to an eighth aspect, a communication apparatus is provided, including at least one processor. The processor is coupled to a memory, and the memory is configured to store instructions, to implement the method in any one of the possible implementations of the first aspect to the third aspect. Optionally, the apparatus further includes the memory. The memory and the processor may be separately deployed, or may be deployed in a centralized manner. Optionally, the apparatus further includes a communication interface, and the processor is coupled to the communication interface.

According to a ninth aspect, a communication apparatus is provided. The apparatus includes at least one logic circuit and an input/output interface, and the logic circuit is configured to: be coupled to the input/output interface, and transmit data through the input/output interface, to perform the method in any one of the first aspect to the third aspect or the possible implementations of the first aspect to the third aspect.

According to a tenth aspect, a computer-readable storage medium is provided. The computer-readable storage medium stores computer-executable instructions, and when the computer-executable instructions run on a computer, the computer is enabled to perform the method according to any one of the first aspect to the third aspect or the implementations of the first aspect to the third aspect.

According to an eleventh aspect, a computer program product is provided, including computer program code. When the computer program code is run, a computer is enabled to perform the method according to any one of the first aspect to the third aspect or the implementations of the first aspect to the third aspect.

According to a twelfth aspect, a communication system is provided, including the first network element, the second network element, and the third network element mentioned above.

It may be understood that any apparatus, chip system, computer-readable storage medium, computer program product, or the like provided above is configured to perform the corresponding method provided above. Therefore, for beneficial effect that can be achieved by the apparatus, the chip system, the computer-readable storage medium, the computer program product, or the like, refer to beneficial effect in the corresponding method. Details are not described herein again.

### BRIEF DESCRIPTION OF DRAWINGS

FIG. 1 is a diagram of an architecture of a 5G communication system applicable to embodiments of this application;
FIG. 2 is a schematic flowchart of a sensing method according to an embodiment of this application;
FIG. 3 is a schematic flowchart of another sensing method according to an embodiment of this application;
FIG. 4 is a schematic flowchart of a sensing method according to an embodiment of this application;
FIG. 5 is a schematic flowchart of another sensing method according to an embodiment of this application;
FIG. 6 is a block diagram of a communication apparatus according to an embodiment of this application; and
FIG. 7 is a block diagram of a communication apparatus according to an embodiment of this application.

### DESCRIPTION OF EMBODIMENTS

The following describes technical solutions of embodiments in this application with reference to accompanying drawings.

The technical solutions in embodiments of this application may be applied to various communication systems such as a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future 6th generation (6th generation, 6G) system.

The terminal device in embodiments of this application may also be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN) or a future 6G network, or the like. This is not limited in embodiments of this application.

A network device in embodiments of this application may be a device configured to communicate with the terminal device. The network device may be a base station (base transceiver station, BTS) in a global system for mobile communication (global system for mobile communication, GSM) system or a code division multiple access (code division multiple access, CDMA) system, a base station (NodeB, NB) in a wideband code division multiple access (wideband code division multiple access, WCDMA) system, an evolved base station (evolved NodeB, eNB or eNodeB) in an LTE system, or a radio controller in a cloud radio access network (cloud radio access network, CRAN) scenario. Alternatively, the network device may be a relay node, an access point, a vehicle-mounted device, a wearable device, a network device in a 5G network and a future 6G network, a network device in a future evolved PLMN network, or the like. This is not limited in embodiments of this application.

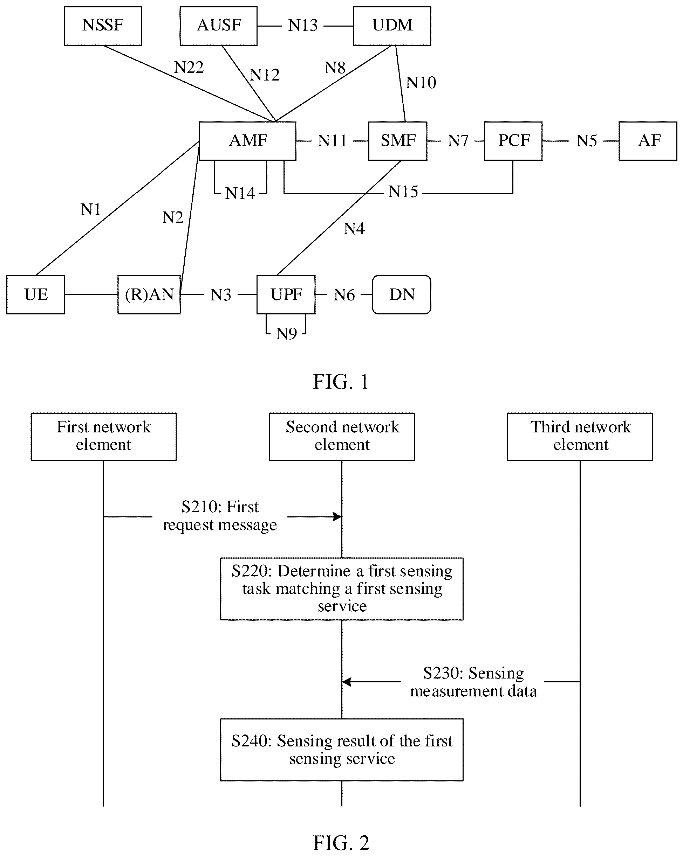

With the update of mobile communication technologies, the 5G network is constructed flexibly and efficiently. The 5G network may use a communication sensing capability as a new capability. For example, a system architecture of the 5G network may be shown in FIG. 1.

FIG. 1 is an example of an architecture of a 5G communication system applicable to embodiments of this application. Functions of a terminal device and network entities are described below.

The terminal device may also be referred to as user equipment (user equipment, UE), an access terminal, a terminal device unit (subscriber unit), a terminal device station, a mobile site, a mobile station (mobile station, MS), a remote station, a remote terminal, a mobile device, a user terminal, a terminal (terminal), a wireless communication device, a terminal device agent, or a terminal device apparatus.

A radio access network (radio access network, RAN) is a network including a plurality of 5G-RAN nodes, and implements a radio physical layer function, resource scheduling and radio resource management, radio access control, and a mobility management function. A 5G-RAN is connected to a UPF through a user plane interface N3, to transmit data of the terminal device. The 5G-RAN establishes a control plane signaling connection to an access and mobility management function network element (access and mobility management function, AMF) through a control plane interface N2, to implement a function such as radio access bearer control.

An AMF is responsible for functions such as UE authentication, UE mobility management, network slice selection, and SMF selection; serves as an anchor for N1 and N2 signaling connections and provides routing of an N1/N2 SM message for an SMF; and maintains and manages status information of UE.

A UPF serves as an anchor point of a PDU session connection, and is responsible for data packet filtering, data transmission/forwarding, rate control, charging information generation, and the like for user equipment.

Unified data management (unified data management, UDM) is mainly used to manage and control user data, for example, manage subscription information, including obtaining subscription information from a unified data repository (unified data repository, UDR) and providing the subscription information to another network element (for example, an AMF); generating an authentication credential of the 3rd generation partnership project (the third generation partnership project, 3GPP) for UE; and registering and maintaining a network element currently serving the UE, for example, an AMF (namely, a serving AMF) currently serving the UE.

A network capability exposure function (network exposure function, NEF) is used to connect interaction between another internal network element of a core network and an external application server of the core network, to provide network capability information for the external application server, or provide information about the external application server to a core network element.

An application function (application function, AF) interacts with a core network element to provide some services, for example, interacts with a policy and control function (policy and control function, PCF) to perform service policy control, interacts with an NEF to obtain some network capability information or provide some application information to a network, and provides some data network access point information to the PCF to generate routing information of a corresponding data service.

An authentication server function (authentication server function, AUSF) is used to perform security authentication on UE when the UE accesses a network.

A network slice selection function (network slice selection function, NSSF) is to select a slice instance set for UE and determine an AMF set and allowed NSSAI for the UE.

A PCF provides configuration policy information to UE, and provides policy information for managing and controlling UE to a control plane network element (for example, an AMF or an SMF) of a network.

FIG. 1 shows interfaces between network elements. Names and functions of the interfaces between the network elements are as follows:
(1) N1 is an interface between the AMF and the terminal, and may be configured to transfer a QoS control rule or the like to the terminal.
(2) N2 is an interface between the AMF and the RAN, and may be configured to transfer radio bearer control information or the like from a core network side to the RAN.
(3) N3 is an interface between the RAN and the UPF, and is mainly configured to transfer uplink and downlink user plane data between the RAN and the UPF.
(4) N4 is an interface between the SMF and the UPF, and may be configured to transfer information between a control plane and a user plane, including delivering a forwarding rule, a QoS control rule, a traffic statistical rule, or the like from the control plane to the user plane, and reporting information about the user plane.
(5) N5 is an interface between the AF and the PCF, and may be configured to deliver an application service request and report a network event.
(6) N6 is an interface between the UPF and the DN, and is configured to transfer uplink and downlink user data flows between the UPF and the DN.
(7) N7 is an interface between the PCF and the SMF, and may be configured to deliver control policies at a protocol data unit (protocol data unit, PDU) session granularity and a service data flow granularity.
(8) N8 is an interface between the AMF and the UDM, and may be used by the AMF to obtain, from the UDM, access and mobility management-related subscription data and authentication data, used by the AMF to register current mobility management-related information of the terminal with the UDM, and the like.
(9) N9 is a user plane interface between UPFs, and is configured to transfer uplink and downlink user data flows between the UPFs.
(10) N10 is an interface between the SMF and the UDM, and may be used by the SMF to obtain session management-related subscription data from the UDM, register current session-related information of the terminal with the UDM, and so on.
(11) N11 is an interface between the SMF and the AMF, and may be configured to transfer PDU session tunnel information between the RAN and the UPF, transfer a control message sent to the terminal, transfer radio resource control information sent to the RAN, and the like.
(12) N12 is an interface between the AMF and the AUSF, and may be used by the AMF to initiate an authentication procedure to the AUSF, where an SUCI may be carried as a subscription identifier.
(13) N13 is an interface between the UDM and the AUSF, and may be used by the AUSF to obtain a user authentication vector from the UDM, to perform an authentication procedure.
(14) N15 is an interface between the PCF and the AMF, and may be used for delivering a terminal policy and an access control-related policy.
(15) N35 is an interface between the UDM and a UDR, and may be used by the UDM to obtain user subscription data information from the UDR.
(16) N36 is an interface between the PCF and the UDR, and may be used by the PCF to obtain policy-related subscription data and application data-related information from the UDR.

The foregoing network elements or functions may be network elements in a hardware device, may be software functions running on dedicated hardware, or may be virtualized functions instantiated on a platform (for example, a cloud platform). Optionally, the foregoing network elements or functions may be implemented by one device, may be jointly implemented by a plurality of devices, or may be a functional module in one device. This is not specifically limited in embodiments of this application.

The access network device in this embodiment of this application may be a radio access network device.

In addition, the foregoing "network element" may also be referred to as an entity, a device, an apparatus, a module, or the like. This is not particularly limited in this application. In addition, for ease of understanding and description, a description of the "network element" is omitted in some descriptions below. For example, an NEF network element is briefly referred to as an NEF. In this case, the "NEF" should be understood as an NEF network element or an NEF entity. Descriptions of same or similar cases are omitted below.

It should be understood that FIG. 1 is merely an example of a network architecture, and a network architecture applicable to embodiments of this application is not limited thereto. Any network architecture that can implement functions of the foregoing network elements is applicable to embodiments of this application.

For example, in some network architectures, network functional entities such as an AMF, an SMF, a PCF, and a UDM are all referred to as network function (network function, NF) network elements; or in some other network architectures, a set of network elements such as an AMF, an SMF, a PCF, and a UDM may be referred to as control plane function (control Plane function, CPF) network elements.

The following uses network elements in a 5G system as an example to describe specific solution details. It may be understood that, when the solution is used in an LTE system or a future communication system, each network element in the solution may be replaced with another network element having a corresponding function. This is not limited in this application.

With development of communication technologies, a base station has a sensing capability brought by a millimeter-wave frequency band, and may perform sensing and recognition on a specific area/object/event, to meet requirements of various scenarios. In a sensing process, a sensing function network element receives a plurality of sensing service requirements. For example, the sensing service may be a single sensing requirement, a continuous sensing requirement, or an event sensing requirement. The sensing function network element may control, based on a sensing service requirement, a sensing device (for example, the sensing device may be a base station) to perform a sensing operation and return sensing measurement data. In the sensing process, a plurality of times of control may need to be performed between the sensing function network element and the sensing device network element. Consequently, there is a large amount of signaling and a large amount of data transmitted between the sensing function network element and the sensing device network element, and overheads of the sensing function network element or the sensing device network element are large.

An embodiment of this application provides a sensing control method, to reduce signaling interaction between a sensing function network element and a sensing device. As shown in FIG. 2, the method includes the following steps.

S210: A second network element receives a first request message from a first network element, where the first request message is used to request a first sensing service.

In S210, the second network element may be a sensing function network element (sensing function, SF). The second network element may be a sensing control device, for example, may be a sensing function network element SF. Optionally, a control plane and a user plane of the SF may be separated. In other words, an SF control plane (SF control plane, SF-C) function and an SF user plane (SF user plane, SF-U) function are separated. An SF-C may send control signaling, for example, a sensing control request (a first control message), to the sensing device by using the control plane. An SF-U may receive sensing measurement data from the sensing device by using a data plane, and optionally process the sensing measurement data, to obtain a sensing result. The SF-C may control the SF-U. For example, the SF-C may select a proper SF-U, and configure one or more configurations of a recognition rule, a processing rule, or a routing rule of the sensing measurement data for the SF-U. Optionally, the SF may be a location management function (location management function, LMF) network element; or an SF function is a part of an LMF function; or the SF and the LMF may be co-deployed.

The first network element may be a demander of a sensing service. For example, the first network element may be an application server (application server, AS), UE, a client (client), an AF, an internal network element, or the like. The internal network element may include a base station, an AMF network element, an LMF network element, or the like. The second network element may directly or indirectly receive the first request message from the first network element. The first request message is used to request the first sensing service. The first request message carries a sensing requirement of the first sensing service, and optionally, may further carry service description information of the first sensing service.

The service description information may include a service type, speed limit value information corresponding to the first sensing service, and the like, for example, a speed limit value in vehicle overspeed detection.

The service type indicates a purpose of the first sensing service, and may include, for example, one or more of the following:
object distribution, map, driving, violation detection, object trajectory tracking, emergency detection, object positioning, object contour size, object speed, weather forecast, human posture, and human health.

The "violation detection" in the service type may be vehicle or aircraft violation detection, for example, vehicle overspeed detection, vehicle line-crossing detection, emergency lane occupation detection for a vehicle, overspeed flight detection, and airway change violation detection.

"Driving" in the service type may include at least one of the following: vehicle autonomous driving, vehicle semi-autonomous driving, vehicle remote driving, and vehicle driving assistance; or aircraft autonomous driving, aircraft semi-autonomous driving, aircraft remote driving, and aircraft driving assistance.

The "emergency detection" in the service type may include at least one of the following: an object enters a specific area range, a collision occurs between objects, a collision risk exists between objects, a disaster occurs, or there is a risk that a disaster occurs.

The "weather detection" in the service type may include at least one of the following: temperature, atmospheric pressure, humidity, rainfall, snowfall, wind speed, wind direction, cloud thickness, suspended particulate matter concentration, and air quality.

The "human health" in the service type may include at least one of the following: breath, heartbeat, blood pressure, weight, skin health, sleep quality, and organ abnormality.

For example, the sensing requirement of the first sensing service includes at least one of the following:
first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner.

Optionally, at least one of the first sensing service precision, the first sensing service resolution, the first sensing service refresh rate, the first sensing service delay, the first sensing service object detection rate, the first sensing service false alarm rate, the first sensing service missed detection rate, and the first sensing service confidence may be indicated by a 5G quality of service identifier (5G quality of service identifier, 5QI).

The sensing service precision may include sensing distance precision, sensing speed precision, and sensing angle precision. Sensing precision indicates an error capability, or an error requirement, or a proximity degree between an actual result and a sensing measurement result obtained by the sensing device by sensing a measured target. For example, the sensing angle precision may indicate an error between a real value and a sensing measurement value of the measured target in terms of an angle.

The sensing service resolution may include sensing distance resolution, sensing speed resolution, and sensing angle resolution, which respectively indicate capabilities of distinguishing between two adjacent targets, or requirements for distinguishing between two adjacent targets, or differences required for distinguishing between two adjacent targets, in terms of a distance, a speed, and an angle based on a sensing result obtained by the sensing device by sensing the measured target; or respectively indicate capabilities of distinguishing between two adjacent targets, or requirements for distinguishing between two adjacent targets, or differences required for distinguishing between two adjacent targets, in terms of a distance, a speed, and an angle by sensing the measured target by the sensing device.

The sensing service refresh rate may indicate a frequency of updating the sensing measurement data or the sensing result, or continuity of sensing measurement data or results. The refresh rate may also be referred to as a frame rate. For example, if the sensing measurement data is sensing point cloud information or point cloud images, the refresh rate may be a refresh rate of the point cloud information. A higher refresh rate indicates better continuity of the point cloud information or the point cloud images. For example, a refresh rate of 30 times/second may indicate that 30 frames of point cloud information or 30 frames of point cloud images are included in 1 second. For another example, if the sensing measurement data is further processed to obtain the sensing result, and the sensing result is sensing image information, the refresh rate of 30 frames/second may indicate that 30 frames of image information are included in 1 second.

The sensing service delay may indicate a time interval between receiving a sensing request from a sensing requester and returning a sensing result to the sensing requester, or a time interval between triggering a sensing request by a sensing application and applying a sensing result by the sensing application, or a time interval between performing a sensing operation by the sensing device and returning a sensing result to the sensing requester.

The sensing service detection rate may indicate a probability that a target actually exists and it is determined that there is a target, or indicate a ratio of detection success events to all detection events for an actually existing target when a sensing result is obtained within a predetermined period.

The sensing service area may indicate a geographical location or area in which the sensing device needs to perform the sensing operation, and may be represented by using absolute coordinates or relative coordinates. This is not limited.

The sensing service missed detection rate may indicate a probability that a target actually exists but it is determined that there is no target, or indicate a ratio of detection loss/failure events to all detection events for an actually existing target when a sensing result is obtained within a predetermined period.

The sensing service false alarm rate may indicate a probability that a target actually does not exist but it is determined that there is a target, or indicate a probability that a target actually exists but it is determined that there is no target, or indicate a ratio of detected events that do not represent a target object to all detection events when a sensing result is obtained within a predetermined period.

The sensing service confidence may indicate a percentage of true sensing results included in all sensing results obtained through detection in a case of given sensing precision.

The sensing service time information includes a sensing time length, or includes a sensing start moment, a sensing end moment, and the like.

The sensing service speed range is a sensing speed range.

The sensing service location point may be absolute coordinates or relative coordinates of a geographical location. This is not limited.

The sensing service dimension indication: A sensing service dimension indicates a dimension of sensing data. For example, the sensing service dimension indicates that first sensing service data is two-dimensional planar data or three-dimensional stereoscopic data.

The sensing service feedback manner includes a single feedback, periodic feedbacks, and an event triggering feedback.

When the sensing service feedback manner is periodic feedbacks, the sensing requirement of the sensing service further includes a feedback periodicity of the first sensing service data.

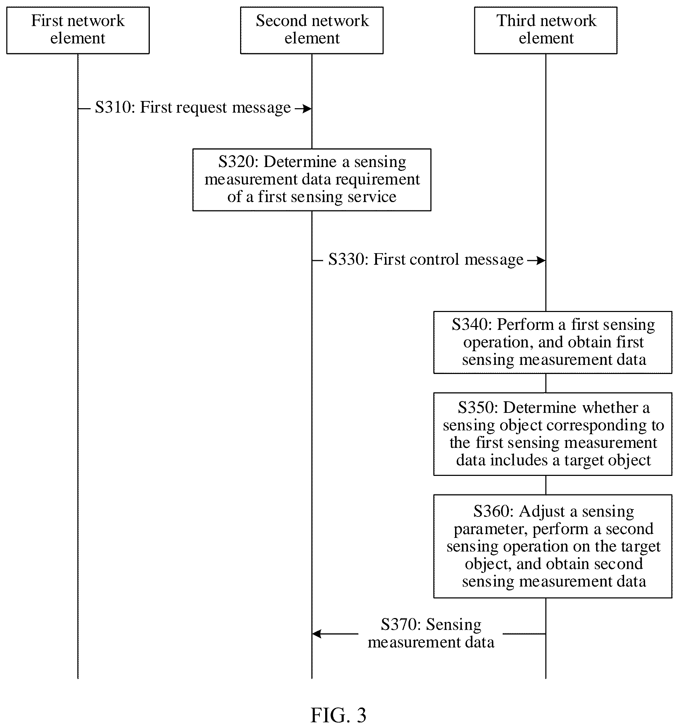

The following describes, by using an example in which the first network element is an AF or UE, how the second network element directly or indirectly receives the first request message from the first network element.
**1. The first network element is an AF.**
   (1) As shown in FIG. 3, the AF may not send the first request message to the SF through the AMF. Specifically, the following several cases are included:
      1.1: The AF directly sends the first request message to the SF. The first request message is used to request the first sensing service. The request message carries the sensing requirement of the first sensing service, and optionally, may further carry the service description information of the first sensing service.
      1.2: The AF sends the first request message to the SF through an NEF and a gateway mobility sensing center (gateway mobile sensing center, GMSC), including the following steps:
         S1: The AF sends the request message to the NEF. The request message is used to request the first sensing service. The request message carries the sensing requirement of the first sensing service, and optionally, may further carry the service description information of the first sensing service.
         S2: The NEF sends the request message to the GMSC. The request message is used to request the first sensing service. The request message carries the sensing requirement of the first sensing service, and optionally, may further carry the service description information of the first sensing service.

The NEF is responsible for performing an authorization check on the first sensing service requested by the AF.

S3: The GMSC sends the request message to the SF. The request message is used to request the first sensing service. The request message carries the sensing requirement of the first sensing service, and optionally, may further carry the service description information of the first sensing service.

The GMSC is responsible for selecting a proper SF.

The request messages sent by the NEF and the GMSC may be respectively determined based on the request messages received from the AF and the NEF.

1.3: The AF sends the first request message to the SF through an NEF:
S1: The AF sends the request message to the NEF. The request message is used to request the first sensing service. The request message carries the sensing requirement of the first sensing service, and optionally, may further carry the service description information of the first sensing service.
S2: The NEF sends the request message to the SF. The request message is used to request the first sensing service. The request message carries the sensing requirement of the first sensing service, and optionally, may further carry the service description information of the first sensing service.

The NEF is responsible for performing an authorization check on the AF and selecting a proper SF.

1.4: The AF sends the first request message to the SF through a GMSC:
S1: The AF sends the request message to the GMSC. The request message is used to request the first sensing service. The request message carries the sensing requirement of the first sensing service, and optionally, may further carry the service description information of the first sensing service.
S2: The GMSC sends the request message to the SF. The request message is used to request the first sensing service. The request message carries the sensing requirement of the first sensing service, and optionally, may further carry the service description information of the first sensing service.

The GMSC is responsible for performing an authorization check on the AF and selecting a proper SF.

(2) Optionally, the AF may send the first request message to the SF through the AMF. Specifically, a process in which the AF sends the first request message to the SF through the AMF includes the following several cases:
2.1: The AF sends the first request message to the SF through an NEF, a GMSC, and the AMF.
S1: The AF sends the request message to the NEF. The request message is used to request the first sensing service. The request message carries the sensing requirement of the first sensing service, and optionally, may further carry the service description information of the first sensing service.
S2: The NEF sends the request message to the GMSC. The request message is used to request the first sensing service. The request message carries the sensing requirement of the first sensing service, and optionally, may further carry the service description information of the first sensing service.

The NEF is responsible for performing an authorization check on the AF.

S3: The GMSC sends the request message to the AMF. The request message is used to request the first sensing service. The request message carries the sensing requirement of the first sensing service, and optionally, may further carry the service description information of the first sensing service.

The GMSC is responsible for selecting a proper AMF. The AMF may be an AMF whose sensing service range includes a sensing area corresponding to a sensing service request. Alternatively, the AMF may be a serving AMF of target object UE or reference UE. The target object UE is a target object that needs to be sensed by the sensing device, and the object is a terminal device (for example, a vehicle equipped with a UE module) or includes a terminal device (for example, a mobile phone carried by a pedestrian). The reference UE is a terminal device required when the sensing device performs the sensing operation on the target object, and may also be referred to as auxiliary UE or sensing UE.

S4: The AMF sends the request message to the SF. The request message is used to request the first sensing service. The request message carries the sensing requirement of the first sensing service, and optionally, may further carry the service description information of the first sensing service.

The request messages sent by the NEF, the GMSC, and the AMF may be respectively determined based on the request messages received from the AF, the NEF, and the GMSC.

2.2: The AF sends the first request message to the SF through an NEF and the AMF.

S1: The AF sends the request message to the NEF. The request message is used to request the first sensing service. The request message carries the sensing requirement of the first sensing service, and optionally, may further carry the service description information of the first sensing service.

S2: The NEF sends the request message to the AMF. The request message is used to request the first sensing service. The request message carries the sensing requirement of the first sensing service, and optionally, may further carry the service description information of the first sensing service.

The NEF is responsible for performing an authorization check on the AF and selecting a proper AMF. The AMF may be an AMF whose sensing service range includes a sensing area corresponding to a sensing service request. Alternatively, the AMF may be a serving AMF of target object UE or reference UE. The target object UE is a target object that needs to be sensed by the sensing device, and the object is a terminal device (for example, a vehicle equipped with a UE module) or includes a terminal device (for example, a mobile phone carried by a pedestrian). The reference UE is a terminal device required when the sensing device performs the sensing operation on the target object, and may also be referred to as auxiliary UE or sensing UE.

S3: The AMF sends the request message to the SF. The request message is used to request the first sensing service. The request message carries the sensing requirement of the first sensing service, and optionally, may further carry the service description information of the first sensing service.

2.3: The AF sends the first request message to the SF through a GMSC and the AMF.

S1: The AF sends the request message to the GMSC. The request message is used to request the first sensing service. The request message carries the sensing requirement of the first sensing service, and optionally, may further carry the service description information of the first sensing service.

S2: The GMSC sends the request message to the AMF. The request message is used to request the first sensing service. The request message carries the sensing requirement of the first sensing service, and optionally, may further carry the service description information of the first sensing service.

The GMSC is responsible for performing an authorization check on the AF and selecting a proper AMF. The AMF may be an AMF whose sensing service range includes a sensing area corresponding to a sensing service request. Alternatively, the AMF may be a serving AMF of target object UE or reference UE. The target object UE is a target object that needs to be sensed by the sensing device, and the object is a terminal device (for example, a vehicle equipped with a UE module) or includes a terminal device (for example, a mobile phone carried by a pedestrian). The reference UE is a terminal device required when the sensing device performs the sensing operation on the target object, and may also be referred to as auxiliary UE or sensing UE.

S3: The AMF sends the request message to the SF. The request message is used to request the first sensing service. The request message carries the sensing requirement of the first sensing service, and optionally, may further carry the service description information of the first sensing service.

**2. The first network element is UE.**
(1) The UE may send the first request message to the SF through an AMF. Specifically, a process in which the UE sends the first request message to the SF through the AMF includes the following several cases:
   1.1: The UE sends the first request message to the SF through the AMF, including the following steps:
      S1: The UE sends the request message to the AMF. The request message is used to request the first sensing service. The request message carries the sensing requirement of the first sensing service, and optionally, may further carry the service description information of the first sensing service.
      S2: The AMF sends the request message to the SF. The request message is used to request the first sensing service. The request message carries the sensing requirement of the first sensing service, and optionally, may further carry the service description information of the first sensing service.
      1.2: The UE sends the first request message to the SF through an NEF and the AMF, including the following steps:
         S1: The UE sends the request message to the NEF. The request message is used to request the first sensing service. The request message carries the sensing requirement of the first sensing service, and optionally, may further carry the service description information of the first sensing service.
         S2: The NEF sends the request message to the AMF. The request message is used to request the first sensing service. The request message carries the sensing requirement of the first sensing service, and optionally, may further carry the service description information of the first sensing service.

The NEF is responsible for performing an authorization check on the UE and selecting a proper AMF. The AMF may be a serving AMF of the UE.

S3: The AMF sends the request message to the SF. The request message is used to request the first sensing service. The request message carries the sensing requirement of the first sensing service, and optionally, may further carry the service description information of the first sensing service.

1.3 (3): The UE sends the first request message to the SF through an NEF, a GMSC, and the AMF, including the following steps:
S1: The UE sends the request message to the NEF. The request message is used to request the first sensing service. The request message carries the sensing requirement of the first sensing service, and optionally, may further carry the service description information of the first sensing service.
S2: The NEF sends the request message to the GMSC. The request message is used to request the first sensing service. The request message carries the sensing requirement of the first sensing service, and optionally, may further carry the service description information of the first sensing service.

The NEF is responsible for performing an authorization check on the sensing service requested by the UE.

S3: The GMSC sends the request message to the AMF. The request message is used to request the first sensing service. The request message carries the sensing requirement of the first sensing service, and optionally, may further carry the service description information of the first sensing service.

The GMSC is responsible for selecting a proper AMF. The AMF may be a serving AMF of the UE.

S4: The AMF sends the request message to the SF. The request message is used to request the first sensing service. The request message carries the sensing requirement of the first sensing service, and optionally, may further carry the service description information of the first sensing service.

(2) The UE may not send the first request message to the SF through an AMF. Specifically, a process in which the UE does not send the first request message to the SF through the AMF includes the following several cases:
2.1: The UE sends the first request message to the SF through an NEF, including the following steps:
S1: The UE sends the request message to the NEF. The request message is used to request the first sensing service. The request message carries the sensing requirement of the first sensing service, and optionally, may further carry the service description information of the first sensing service.

The NEF is responsible for performing an authorization check on the UE and selecting a proper SF.

S2: The NEF sends the request message to the SF. The request message is used to request the first sensing service. The request message carries the sensing requirement of the first sensing service, and optionally, may further carry the service description information of the first sensing service.

2.2 (3): The UE sends the first request message to the SF through an NEF and a GMSC, including the following steps:
S1: The UE sends the request message to the NEF. The request message is used to request the first sensing service. The request message carries the sensing requirement of the first sensing service, and optionally, may further carry the service description information of the first sensing service.

S2: The NEF sends the request message to the GMSC. The request message is used to request the first sensing service. The request message carries the sensing requirement of the first sensing service, and optionally, may further carry the service description information of the first sensing service.

The NEF is responsible for performing an authorization check on the UE.

S3: The GMSC sends the request message to the SF. The request message is used to request the first sensing service. The request message carries the sensing requirement of the first sensing service, and optionally, may further carry the service description information of the first sensing service.

The GMSC is responsible for selecting a proper SF.

In different transmission modes of the first request message, the GMSC network element may be replaced with another network element that can implement a function of the network element in a corresponding transmission mode. In other words, the GMSC may be replaced with another network element that can perform routing and/or an authorization check and/or select an AMF and/or select an SF. This is not limited in this embodiment of this application.

In the foregoing manner, the second network element receives the first request message from the first network element. The message carries the sensing requirement of the first sensing service requested by the sensing requester, and optionally, may further carry the service description information of the first sensing service.

S220: The second network element determines a first sensing task matching the first sensing service, where the first sensing task is a sensing task executed by a third network element.

The third network element may be a sensing device network element (a network element that performs the sensing operation), for example, may be a base station, a client, or a terminal device.

In S220, the first sensing task may be one of at least one sensing task executed by the third network element, and the third network element may be executing one or more sensing tasks. For example, the third network element executes the first sensing task, a second sensing task, and a third sensing task simultaneously. In addition, each sensing task is not limited to obtaining a sensing result of one sensing service requested by the sensing requester. For example, data of the first sensing task may be used by the second network element to obtain a sensing result of the second sensing service and a sensing result of the third sensing service. To be specific, when the third network element reports the data of the first sensing task to the second network element, the second network element may obtain the sensing result of the second sensing service and the sensing result of the third sensing service based on the data, and return a corresponding sensing result to a corresponding sensing requester.

When determining the first sensing task, the second network element may not be limited to determining the first sensing task from the at least one sensing task executed by the third network element, but may determine the first sensing task executed by the third network element from a plurality of sensing tasks executed by a plurality of sensing device network elements.

The second network element may determine, based on a sensing requirement of the first sensing task and the sensing requirement of the first sensing service, the first sensing task matching the first sensing service.

At least one sensing task executed by each sensing device network element has a corresponding sensing requirement. For example, the first sensing task executed by the third network element has a corresponding sensing requirement, and the sensing requirement of the first sensing task includes at least one of the following:
first sensing task precision, first sensing task resolution, a first sensing task refresh rate, a first sensing task delay, a first sensing task detection rate, a first sensing task false alarm rate, a first sensing task missed detection rate, a first sensing task confidence, a first sensing task area, first sensing task time information, a first sensing task speed range, a first sensing task location point, a first sensing task distance, a first sensing task priority, a first sensing task dimension indication, and a first sensing task feedback manner.

Parameters such as the first sensing task precision, the first sensing task resolution, the first sensing task refresh rate, the first sensing task delay, the first sensing task object detection rate, the first sensing task false alarm rate, the first sensing task missed detection rate, and the first sensing task confidence are 5G quality of service indicators (5G quality of service indicator, 5QI).

For explanations of metrics in the sensing requirement of the first sensing task, refer to the foregoing explanations of metrics in the sensing requirement of the first sensing service. Details are not described herein again.

As described above, the data of the first sensing task may be used to obtain a sensing result of at least one sensing service. In other words, the first sensing task may match the at least one sensing service. For example, before matching the first sensing service, the second network element may obtain the sensing result of the second sensing service and the sensing result of the third sensing service based on the data of the first sensing task. Because metrics in the sensing requirement of the second sensing service and metrics in the sensing requirement of the third sensing service that are requested by the corresponding sensing requester may be different, the metrics in the sensing requirement of the first sensing task may meet at least higher metrics in the sensing requirement of the second sensing service and the sensing requirement of the third sensing service that are requested by the sensing requester, so that the obtained sensing measurement data can meet the sensing requirement of the second sensing service and the sensing requirement of the third sensing service.

When determining the sensing task matching the first sensing service, the second network element determines the first sensing task from the plurality of sensing tasks executed by the plurality of sensing device network elements. Specifically, the second network element may consider sensing requirements of the plurality of sensing tasks executed by the plurality of sensing device network elements. If the plurality of sensing tasks include a sensing task that meets the sensing requirement of the first sensing service, the first sensing task may be determined from the sensing task that meets the sensing requirement of the first sensing service. If sensing requirements of the plurality of sensing tasks do not meet the sensing requirement of the first sensing service, a sensing task whose sensing requirement closest to the sensing requirement of the first sensing service may be determined from the plurality of sensing tasks. Therefore, the second network element may finally determine the first sensing task matching the first sensing service.

When the metrics in the sensing requirement of the first sensing task meet the metrics in the sensing requirement of the first sensing service, for example, the metrics requested by the first sensing task and the metrics requested by the first sensing task may be shown as follows:
For example, the first sensing service delay is 100 ms, and the first sensing task delay is 100 ms.

The first sensing service delay and the first sensing task delay may alternatively be different.

First sensing service distance resolution is 0.5 m, and first sensing task distance resolution is 0.4 m.

First sensing service distance precision is 0.3 m, and first sensing task distance precision is 0.3 m.

First sensing service speed resolution is 1.5 m/s, and first sensing task speed resolution is 1.3 m/s.

First sensing service speed precision is 1 m/s, and first sensing task speed precision is 0.8 m/s.

The first sensing service refresh rate is 10 Hz, and the first sensing task refresh rate is 5 Hz.

Other metrics are not described. That is, the metrics in the sensing requirement of the first sensing task meet the metrics in the sensing requirement of the first sensing service, and a part of the metrics may have specific redundancy. For example, the first sensing task distance resolution, the first sensing task speed resolution, the first sensing task speed precision, and the first sensing task refresh rate have specific redundancy respectively relative to the first sensing service distance resolution, the first sensing service speed resolution, the first sensing service speed precision, and the first sensing service refresh rate.

When a part or all of the metrics in the sensing requirement of the first sensing task do not meet a part or all of the metrics in the sensing requirement of the first sensing service, for example, several metrics in the sensing requirement of the first sensing task determined by the second network element are as follows: the first sensing task delay is 100 ms, and the first sensing task distance resolution is 0.6 m; and several metrics in the sensing requirement of the first sensing service are as follows: the first sensing service delay is 100 ms, and the first sensing service distance resolution is 0.5 m. The first sensing task distance resolution is 0.6 m, and does not meet a requirement of the first sensing service distance resolution. However, because the other metrics are met, the first sensing task may be used as a sensing task matching the first sensing service.

In this case, after determining the first sensing task, the second network element further updates the sensing requirement of the first sensing task, so that the updated sensing requirement of the first sensing task meets the sensing requirement of the first sensing service. For the foregoing described case in which only the first sensing task distance resolution is not met, the second network element may update the indicator, for example, update the first sensing task distance resolution to 0.5 m. Optionally, the second network element may update the first sensing task distance resolution to 0.4 m, to reserve specific redundancy for subsequent data processing.

The second network element may further determine the first sensing task with reference to first information. To be specific, the second network element determines, based on the first information, the sensing requirement of the first sensing service, and the sensing requirement of the first sensing task, the first sensing task matching the first sensing service. The first information includes at least one of the following: capability information of at least one sensing device network element, where the at least one sensing device network element includes the third network element, sensing data processing experience information of the second network element, and assistance information related to the first sensing service; the capability information of the at least one sensing device network element includes an available sensing resource, supportable sensing precision, supportable sensing resolution, a supportable sensing distance, a supportable sensing angle, a supportable sensing area, a supportable sensing speed range, an available processing capability, and a hardware configuration of each of the at least one sensing device network element; the sensing data processing experience information of the second network element includes at least one of the following: a detection rate, a missed detection rate, a false alarm rate, and a confidence that correspond to a historical sensing result; and the assistance information related to the first sensing service includes at least one of the following: sensing area related information of the first sensing service, sensing object information of the first sensing service, sensing time related information of the first sensing service, and purpose information of the first sensing service.

The sensing object information of the first sensing service includes a type (a pedestrian, a vehicle, or the like) and a target size of the sensing object of the first sensing service. The sensing time related information of the first sensing service includes a traffic volume (whether the traffic volume is in a peak hour) in a sensing time range of the first sensing service. The sensing purpose information of the first sensing service includes that sensing is performed for recognition, contour drawing, tracking, and the like.

The second network element may determine, from the at least one sensing device network element based on the capability information of the at least one sensing device network element, several sensing device network elements including the third network element. The several sensing device network elements need to have available sensing resources capable of executing the first sensing service. In addition, supportable sensing precision, supportable sensing resolution, supportable sensing distances, supportable sensing angles, supportable sensing areas, supportable sensing speed ranges, available processing capabilities, and hardware configurations of these sensing device network elements all need to meet a requirement of executing the first sensing service.

Proper redundancy may be determined based on the sensing data processing experience information of the second network element, that is, a detection rate, a missed detection rate, a false alarm rate, and a confidence corresponding to a historical sensing result. For example, only the metric of the sensing distance resolution is considered. If the first sensing service distance resolution is 0.5 m, the first sensing task distance resolution is 0.4 m, the second sensing task distance resolution is 0.5 m, and the historical sensing result corresponds to a low detection rate, or a high false alarm rate, or a low confidence, the first sensing task having a high sensing distance resolution requirement may be selected as the sensing task matching the first sensing service, thereby improving accuracy of the sensing result.

When the second network element refers to the assistance information related to the first sensing service, for example, the first sensing service is used to perform pedestrian red-light violation detection at an intersection, and the second network element determines that an intersection (the sensing area related information of the first sensing service) related to the first sensing service is an intersection with large traffic, a sensing time is a rush hour (the sensing time related information of the first sensing service), the sensing object is a pedestrian with a small target (sensing object information of the first sensing service), and the sensing purpose is to recognize a pedestrian violating a red light (purpose information of the first sensing service). In this way, to obtain a more precise sensing result, when determining the first sensing task, the second network element may match a sensing task with higher sensing task precision and higher sensing task resolution.

If all the metrics in the sensing requirement of the first sensing task matched by the second network element meet all the metrics in the sensing requirement of the first sensing service in S220, the third network element continues to execute the first sensing task based on a related parameter of currently executing the first sensing task, and may perform step S230.

If a part or all of the metrics in the sensing requirement of the first sensing task matched by the second network element do not meet a part or all of the metrics in the sensing requirement of the first sensing service in S220, the third network element may update the part or all of the metrics, and trigger the third network element to perform the sensing operation based on the updated sensing requirement of the first sensing task. Steps S221 and S222 may be performed.

S221: The second network element sends the updated sensing requirement of the first sensing task to the third network element. Correspondingly, the third network element receives the updated sensing requirement of the first sensing task.

The second network element may send the updated sensing requirement of the first sensing task by using a sensing control message. The sensing control message may carry all sensing requirements of the first sensing task, or may carry only a part of metrics that need to be updated in the sensing requirement, thereby reducing load caused by signaling sending.

S222: The third network element performs sensing based on the updated sensing requirement of the first sensing task, and obtains the sensing measurement data.

Specifically, the third network element may adjust, based on the updated sensing requirement of the first sensing task, a sensing parameter of executing the first sensing task, where the sensing parameter may include at least one of parameters such as a sensing bandwidth, a transmit power, a beam width, a beam direction, and a scanning periodicity, for example, a larger transmit power or a narrower beam width may be used, so that the sensing operation meets the sensing requirement of the first sensing service; and/or the third network element may further adjust a sensing area, sensing time information, a sensing data dimension, a feedback manner, and the like of the first sensing task.

S230: The third network element sends the sensing measurement data to the second network element. Correspondingly, the second network element receives the sensing measurement data.

In S222, the sensing measurement data obtained when the third network element executes the first sensing task not only may be used for the first sensing service, but also may be used for another sensing service, for example, the second sensing service or the third sensing service. For example, the sensing measurement data reported by the third network element is used to determine a vehicle line crossing status and a pedestrian red-light violation status at an intersection. The sensing measurement data may be directly obtained by the third network element by executing the first sensing task, or may be data obtained through further processing based on directly obtained data.

When the metrics in the sensing requirement of the first sensing task determined by the second network element meet the metrics in the sensing requirement of the first sensing service, the second network element does not update the sensing requirement of the first sensing task. In this case, the sensing measurement data in S230 is sensing measurement data reported after the third network element continues to execute the first sensing task based on an original sensing parameter (including at least one of the sensing bandwidth, the transmit power, the beam width, the sensing direction, and the scanning periodicity), the sensing area, the sensing time information, the sensing data dimension, the feedback manner, and the like, for example, periodically reported sensing measurement data of the first sensing task. However, after receiving the sensing measurement data, the second network element obtains the sensing result of the first sensing service based on the sensing measurement data in addition to obtaining a sensing result corresponding to another sensing service that originally matches the first sensing task.

When the part or all of the metrics in the sensing requirement of the first sensing task determined by the second network element do not meet the part or all of the metrics in the sensing requirement of the first sensing service, the second network element updates the sensing requirement of the first sensing task based on steps S221 and S222, and the sensing measurement data is obtained by the third network element by performing the sensing operation after adjusting, based on the updated sensing requirement, the sensing parameter of executing the first sensing task.

S240: The second network element obtains the sensing result of the first sensing service based on the sensing measurement data.

The second network element may analyze and process the sensing measurement data, to determine whether the sensing object corresponding to the sensing measurement data includes the target object of the first sensing service. For example, the sensing measurement data is analyzed, to determine whether an overspeed vehicle of a vehicle overspeed detection sensing service can be found.

If the sensing object corresponding to the sensing measurement data includes the target object, optionally, the second network element may perform association and joint processing on a plurality of frames of sequences of the sensing measurement data, to obtain a continuous change characteristic of the target object of the first sensing service, to obtain a final sensing result through calculation.

For example, when the first sensing service is used to determine a vehicle line crossing status at an intersection, the second network element may obtain a vehicle line crossing status at the intersection in a time period by processing the sensing measurement data.

If the second network element processes the sensing measurement data to obtain the sensing result of the first sensing service, and then finds that precision of processed data does not meet a requirement, for example, when determining the vehicle line crossing status, if the target vehicle crosses a line, but an obtained image frame has low resolution, low precision, or the like, the second network element may continue to update the sensing requirement of the first sensing task, and trigger the third network element to perform the sensing operation based on the updated sensing requirement; or the second network element may match a sensing task with a higher sensing requirement, so that a part of metrics in a sensing requirement of the newly matched sensing task has more redundancy than a part of the metrics in the sensing requirement of the first sensing service, to obtain a better processing result.

It should be understood that the first sensing service may alternatively match the sensing tasks executed by the plurality of sensing device network elements. For example, when the first sensing service is determining a line crossing status at an intersection, if a sensing area at the intersection is large, the first sensing service may be allocated to the plurality of sensing device network elements for processing, and each sensing device network element may sense a part of area at the intersection. After receiving sensing measurement data reported by the plurality of sensing device network elements, the second network element may perform processing based on the sensing measurement data reported by the plurality of sensing device network elements, to obtain a processing result. Matching the first sensing service with another sensing task may be processed in a manner similar to a manner of matching the first sensing task. Details are not described herein again.

If the sensing object corresponding to the sensing measurement data includes the target object, the second network element may return the sensing result to the first network element along an original path based on step S210. When the target object is not found, the sensing result may not be returned to the first network element. For example, the sensing measurement data is periodically fed back. The second network element may not return the sensing result to the first network element in a periodicity in which the target object is not found, and returns the sensing result to the first network element only when the target object is found, thereby reducing data transmission overheads between the first network element and the second network element.

Although the second network element can determine the first sensing task matching the first sensing service in the foregoing sensing method, in some cases, for example, sensing requirements of all sensing tasks being executed are greatly different from the sensing requirement of the first sensing service, the first sensing task determined by the second network element may be a new sensing task established by the second network element. In this case, the second network element needs to send the sensing control message to the third network element, to indicate the third network element to establish a sensing task. The second network element and the third network element need to establish a data transmission channel and allocate a corresponding resource for the sensing task. When the second network element subsequently receives other request information to request another sensing service, the first sensing task may be used as a candidate sensing task of the another sensing service, and the second network element may determine, in the method described above, whether to match the sensing service with the first sensing task or the another sensing task. Details are not described herein again.

When the foregoing sensing method is executed, because the second network element matches the sensing service with the sensing task, signaling interaction that needs to be performed, for example, when the second network element and the third network element re-establish a data transmission channel, is avoided. In addition, if the metrics in the sensing requirement of the first sensing task determined by the second network element meet the metrics in the sensing requirement of the first sensing service, the second network element may not need to send the sensing control message to the third network element, but the third network element continues to execute the first sensing task based on original parameters. When receiving the sensing measurement data of the first sensing task, the second network element may directly obtain the sensing result of the first sensing service based on the data, thereby reducing signaling interaction and a delay caused by sending the sensing control message.

FIG. 3 shows another sensing method according to an embodiment of this application. The method includes the following steps.

S310: A second network element receives a first request message from a first network element, where the first request message is used to request a first sensing service, and the first request message includes a sensing requirement and service description information of the first sensing service. Correspondingly, the first network element sends the first request message to the second network element.

The second network element may be an SF. The first network element may be UE, a terminal device, a client, an AF or an AS, an internal network element, or the like. The internal network element may include a base station, an AMF network element, an LMF network element, or the like.

In S310, the first request message is used to request the first sensing service, and carries the sensing requirement and the service description information of the first sensing service. The first request message may be directly or indirectly sent to the second network element in the manner described in S210. For specific details, refer to the descriptions of S210. Details are not described herein again.

S320: The second network element determines a sensing measurement data requirement of the first sensing service based on the service description information.

The sensing measurement data requirement of the first sensing service includes point cloud information and operation information of a target object of the first sensing service. The point cloud information of the target object includes at least one of the following: a scattering point location range, a scattering point speed range, a scattering point direction range, a scattering point size, scattering point contour information, and scattering point intensity information, and the operation information includes at least one of the following operations on the target object: target tracking, target recognition, target contour delineation, target collision avoidance recognition, and recognition of entry of a target to a specific area or location.

The scattering point location range, the scattering point speed range, and the scattering point direction range are respectively a location range, a speed range, and a direction range that correspond to a scattering point corresponding to the target object. The scattering point size and the scattering point contour information indicate a range covered by a point cloud including scattering points corresponding to a same target object (for example, an overspeed vehicle) and a contour shape including the point cloud. Types of sensing objects may be distinguished based on the scattering point size and/or the contour information. For example, ranges covered by point clouds including scattering points corresponding to a pedestrian, a car, and a large truck are significantly different. The scattering point intensity information may also be used as a type for distinguishing the sensing object. For example, when a beam used for sensing is directed to a vehicle body, because a surface of the vehicle body is smooth, returned scattering point intensity is high; and when a beam used for sensing is directed to a tree or a plant, returned scattering point intensity is low.

The target object is related to the service description information of the first sensing service, and the point cloud information requirement of the target object may be determined with reference to the description information of the first sensing service. For example, when a service type of the first sensing service is vehicle line-crossing detection, the target object is a line-crossed vehicle. When a sensing device network element transmits a signal to the line-crossed vehicle, the line-crossed vehicle may be modeled based on a parameter of the transmitted signal and a parameter of a returned echo signal, to obtain a plurality of scattering points (or point clouds) corresponding to the line-crossed vehicle. A location range and a direction range of a part of the scattering points corresponding to the line-crossed vehicle meet a specific condition (being near a line), and based on a point cloud contour and a point cloud size range corresponding to the line-crossed vehicle, it can be determined that a vehicle crosses the line, and a vehicle type is determined. In this way, the point cloud information requirement of the target object needs to include at least one of the scattering point location range, the scattering point contour information, the scattering point intensity information, and the scattering point size. For another example, when the service type of the first sensing service is vehicle overspeed detection, the target object is an overspeed vehicle in a specific interval range. A location range of a scattering point corresponding to the overspeed vehicle needs to be within an overspeed detection interval range, a speed of the scattering point in a specific direction in the interval range needs to be within a specific range, and a point cloud contour and a point cloud size range that correspond to the line-crossed vehicle correspond to a vehicle type. In this way, the point cloud information requirement of the target object includes at least one of the scattering point speed range, the scattering point location range, the scattering point direction range, the scattering point contour information, and the scattering point intensity information.

When determining the point cloud information requirement, the second network element may further refer to the sensing requirement of the first sensing service. For example, when the service type of the first sensing service is vehicle overspeed detection, a speed limit in a specified location interval is 60 km/h. With reference to metrics such as first sensing service precision, a first sensing service confidence, and a first sensing service speed range in the sensing requirement of the first sensing service, the second network element may convert a vehicle speed limit value into a scattering point speed range. For example, in consideration of sensing precision, the scattering point speed range may be widened compared with the speed limit value. For example, a sensing object corresponding to a scattering point speed greater than 55 km/h is considered.

The operation information is an action performed after the target object is detected, and is also related to the service description information. For example, when the service type is vehicle trajectory tracking, the operation information may include target tracking and target recognition. To be specific, after a target vehicle is detected, a driving trajectory of a vehicle needs to be tracked and recognized in real time, to avoid tracking an incorrect vehicle. When the service type is vehicle line-crossing detection, the operation information may include target recognition and/or target contour delineation. To be specific, after the line-crossed vehicle is detected, the line-crossed vehicle is recognized (for example, vehicle recognition) and/or target contour delineation (for example, three-dimensional reconstruction is performed on the line-crossed vehicle, to obtain a type of the line-crossed vehicle) is performed.

In other words, there is a specific mapping relationship between the service description information of the first sensing service and metrics in the point cloud information requirement and the operation information of the target object. The mapping relationship may be obtained by analyzing a large amount of data, using a neural network, or the like. Therefore, the second network element may determine the point cloud information requirement and the operation information of the target object based on the service description information of the first sensing service.

S330: The second network element sends a first control message to a third network element, where the first control message is used to request the third network element to perform a sensing operation, and the first control message includes the sensing measurement data requirement of the first sensing service and the sensing requirement of the first sensing service. Correspondingly, the third network element receives the first control message.

S340: The third network element performs a first sensing operation based on the first control message, and obtains first sensing measurement data.

The third network element may understand the sensing measurement data requirement of the first sensing service, and perform the first sensing operation based on the first control message. The third network element may use a specific sensing parameter when performing the sensing operation. The sensing parameter may include at least one of the following: a sensing bandwidth, a transmit power, a beam width, a sensing direction, and a scanning periodicity. The third network element may perform the first sensing operation based on the sensing requirement of the first sensing service and the service description information of the first sensing service. For example, when the first sensing service is used to track the overspeed vehicle, the third network element needs to recognize the overspeed vehicle, and then further track the vehicle after recognizing the overspeed vehicle. The third network element may perform the first sensing operation to recognize the overspeed vehicle, and the sensing requirement of the first sensing service may be a sensing requirement for indicating to perform tracking. The third network element may perform the first sensing operation based on the sensing requirement of the first sensing service. To save sensing resources, the third network element may use a sensing requirement lower than the sensing requirement of the first sensing service when recognizing the target object, and then perform sensing based on the sensing requirement of the first sensing service after finding the target object.

S350: The third network element determines whether a sensing object corresponding to the first sensing measurement data includes the target object.

The third network element may obtain the first sensing measurement data after performing the first sensing operation. The third network element may analyze the first sensing measurement data, and determine whether there is a sensing object whose scattering point or point cloud metrics meet metrics in the point cloud information requirement. For example, for overspeed detection, whether a speed of a scattering point corresponding to a vehicle contour falls within the scattering point speed range, to further determine whether the target object exists in the sensing object corresponding to the first sensing measurement data. The sensing object corresponding to the first sensing measurement data is all objects sensed when the third network element performs the first sensing operation. For example, the third network element performs vehicle overspeed detection at an intersection, an obtained sensing object corresponding to the first sensing measurement data is all vehicles, pedestrians, and other objects sensed by the third network element at the intersection in a specific time period, and the target object is a sensing object to be determined by the first sensing service, for example, the overspeed vehicle in the sensing object.

S360: If the sensing object corresponding to the first sensing measurement data includes the target object and the first sensing measurement data does not meet the sensing requirement of the first sensing service, the third network element adjusts a sensing parameter, performs a second sensing operation on the target object, and obtains second sensing measurement data.

In S360, if the third network element determines that the sensing object corresponding to the first sensing measurement data includes the target object and the first sensing measurement data does not meet the sensing requirement of the first sensing service, the third network element may adjust the sensing parameter, to perform the second sensing operation on the target object. The second sensing operation may be a target operation of the first sensing service, for example, target tracking, target recognition, or target contour delineation. The third network element may perform the second sensing operation on the target object by adjusting the sensing parameter.

If the sensing object corresponding to the first sensing measurement data obtained by the third network element by performing the first sensing operation includes the target object, for the foregoing example of vehicle overspeed detection, that is, when the third network element senses the overspeed vehicle, to perform target tracking on the overspeed vehicle, or perform target contour delineation on the overspeed vehicle, or perform target recognition on the overspeed vehicle, the third network element may adjust the sensing parameter for further sensing. Compared with a case in which the second network element analyzes and processes the first sensing measurement data, in this way, signaling interaction between the third network element and the second network element can be reduced.

For example, if the operation information for determining a vehicle overspeed status is target contour delineation and target recognition, after the overspeed vehicle (target object) is determined, the overspeed vehicle may be sensed by using a narrow beam or still by using a wide beam, but a scanning frequency is increased to increase echo information energy, or a transmit power is increased to obtain a higher signal-to-noise ratio and/or better precision.

In other words, the sensing parameter of the second sensing operation and the sensing parameter of the first sensing operation may meet at least one of the following: a transmit power used for the first sensing operation is less than a transmit power used for the second sensing operation; a beam width used for the first sensing operation is greater than a beam width used for the second sensing operation; and a scanning periodicity used for the first sensing operation is greater than a scanning periodicity used for the second sensing operation.

For target tracking, target recognition, and target contour delineation, for target tracking, the target object needs to be first recognized and then tracked. A sensing parameter used for target recognition may be lower than a sensing parameter used for target tracking, and may also be lower than the sensing requirement of the first sensing service. However, for target recognition and target contour delineation, such sensing may be completed by performing only one sensing operation.

After performing the first sensing operation and determining that the sensing object corresponding to the first sensing measurement data includes the target object, the third network element may further determine whether the first sensing measurement data meets the sensing requirement of the first sensing service.

If the sensing object corresponding to the first sensing measurement data includes the target object and the first sensing measurement data meets the sensing requirement of the first sensing service, the first sensing measurement data may be directly sent to the second network element in S370. For example, when performing target recognition or target contour delineation, if the third network element directly performs sensing based on the sensing requirement of the first sensing service and also finds the target object, the third network element may not need to continue to adjust the sensing parameter to continue to perform sensing, but directly send the first sensing measurement data to the second network element. In other words, it may be optional that the third network element adjusts the sensing parameter to perform the second sensing operation, to obtain the second sensing measurement data. Based on different specific cases, the third network element may not adjust the sensing parameter or perform the second sensing operation.

If the first sensing measurement data does not meet the sensing requirement of the first sensing service, an operation may be performed based on S360. In this case, when sending the sensing measurement data to the second network element in S370, the third network element may send, to the second network element, only the sensing measurement data that meets the sensing requirement of the first sensing service, thereby reducing data transmission overheads between the second network element and the third network element; or may send all sensing measurement data to the second network element.

If the sensing object corresponding to the first sensing measurement data does not include the target object, the first sensing measurement data may not be sent to the second network element, thereby reducing data transmission overheads between the second network element and the third network element and data processing overheads of the third network element.

S370: The third network element sends the sensing measurement data to the second network element.

It can be learned from the foregoing descriptions that, in different cases, the sensing measurement data sent by the third network element to the second network element may include only the first sensing measurement data, or may include the first sensing measurement data and the second sensing measurement data, or may include only the second sensing measurement data. For details, refer to the foregoing descriptions. Details are not described herein again.

When the third network element performs the sensing operation and reports all corresponding sensing measurement data to the second network element regardless of whether the target object is found, to reduce load of parsing the sensing measurement data by the second network element, indication information may be sent to the second network element to indicate whether the sensing measurement data includes data corresponding to the target object, or whether the sensing object corresponding to the sensing measurement data includes the target object. For example, during vehicle line-crossing detection, if a line-crossed vehicle is found, a message of the reported sensing measurement data may be used to carry indication information, to indicate that the sensing object corresponding to the sensing measurement data includes the line-crossed vehicle. Therefore, after receiving the message, the second network element may parse the sensing measurement data based on the indication information. If the indication information indicates that there is no target object, for example, no line-crossed vehicle is found, the indication information may indicate that the target object does not exist. Therefore, after receiving the sensing measurement data, the second network element may not parse the sensing measurement data, thereby reducing a data processing amount of the second network element.

Optionally, for example, the sensing measurement data may be indicated by the indication information only when the target object is found, and the sensing measurement data is not indicated by the indication information when the target object is not found.

In addition, the indication information and the sensing measurement data may be sent in one message, or may not be sent in one message. For example, the sensing measurement data and the indication information may be sent on different preset resources. This is not limited in this application.

In this embodiment of this application, embodiments in FIG. 2 and FIG. 3 may be combined, to further reduce data transmission overheads or signaling interaction overheads of the second network element or the third network element. For example, after receiving the first request message, the second network element matches the first sensing service with the first sensing task, and may further determine the sensing measurement data requirement of the first sensing service based on the service description information carried in the first request message. The sensing measurement data requirement includes the point cloud information requirement and the operation information of the target object, the point cloud information requirement of the target object includes at least one of the following: the scattering point location range, the scattering point speed range, the scattering point direction range, the scattering point size, the scattering point contour information, and the scattering point intensity information, and the operation information includes at least one of the following: target tracking, target recognition, target contour delineation, target collision avoidance recognition, and recognition of entry of a target to a specific area or location. Then, the second network element may send the sensing measurement data requirement to the third network element, so that the third network element obtains the sensing measurement data based on the sensing measurement data requirement.

If the sensing requirement of the first sensing task meets the sensing requirement of the first sensing service when the second network element performs matching, the second network element does not need to update the sensing requirement of the third network element, and only needs to separately send the sensing measurement data requirement to the third network element. If the sensing requirement of the first sensing task does not meet the sensing requirement of the first sensing service, the second network element needs to update the sensing requirement of the first sensing task. In this case, the sensing measurement data requirement may be sent to the third network element together with an updated sensing requirement of the first sensing task, for example, sent by using a sensing control message (a first control message).

If the third network element executes a plurality of sensing tasks simultaneously, the second network element further needs to indicate a sensing task corresponding to the sensing measurement data requirement when sending the sensing measurement data requirement. Then, the third network element may analyze the sensing measurement data obtained by executing the first sensing task, and determine whether the target object exists. If the target object exists, and the sensing measurement data of the first sensing task meets the sensing requirement of the first sensing service, the sensing measurement data may be directly sent to the second network element. If there is the target object, and the sensing measurement data of the first sensing service does not meet the sensing requirement of the first sensing service, the third network element may adjust the sensing parameter to further sense the target object. Adjusting the sensing parameter may be creating another sensing task, or sensing the target object by adding a sensing beam, and obtaining sensing measurement data that meets the sensing requirement. Then, the sensing measurement data may be sent to the second network element, thereby reducing signaling consumption overheads between the second network element and the third network element.

If no target object exists, the third network element may process, for example, the sensing measurement data of the first sensing task, and remove data related to the first sensing service, thereby reducing data transmission overheads.

When sending the sensing measurement data to the second network element, the third network element may still indicate, by using the indication information, whether the sensing object corresponding to the sensing measurement data includes the target object. For specific details, refer to the foregoing descriptions. Details are not described herein again.

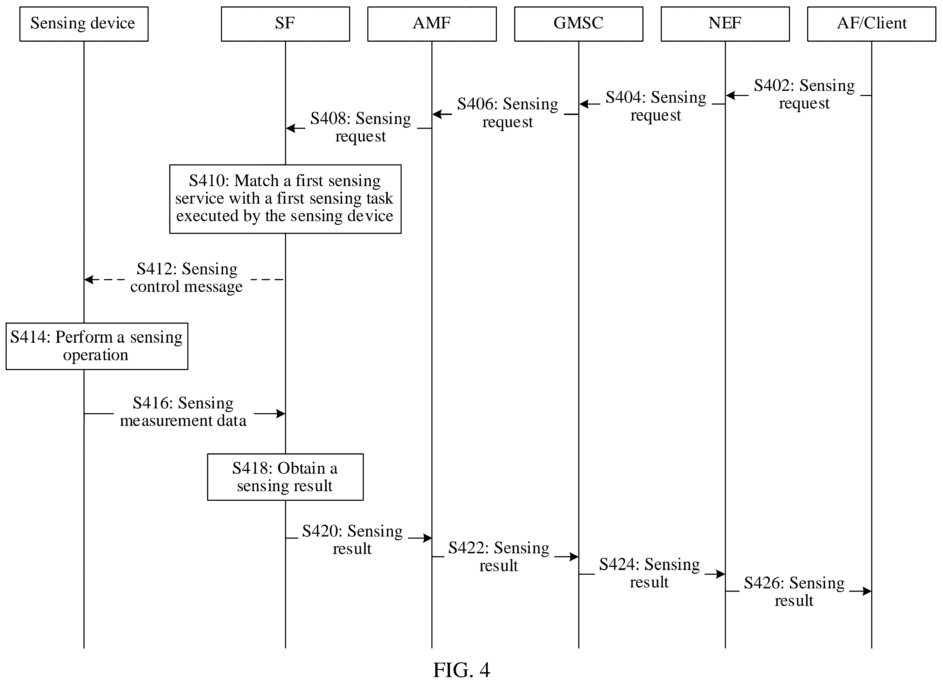

FIG. 4 is a schematic flowchart of a sensing method according to an embodiment of this application. As shown in FIG. 4, the method includes the following steps.

S402: An AF/client sends a sensing request to an NEF network element.

The sensing request may be a request for a first sensing service, and carries a sensing requirement of the first sensing service, and may further carry service description information of the first sensing service.

S404: The NEF network element sends the sensing request to a GMSC network element.

The NEF network element performs an authorization check on the AF/client, that is, queries whether a first sensing service of the AF/client is authorized. For example, the NEF network element may determine, through a UDM/UDR network element, whether the first sensing service of the AF/client is authorized. Specifically, the NEF network element may obtain subscription information of the AF/client from the UDM/UDR network element. The subscription information includes service authorization information of the AF/client. The NEF network element determines, based on the service authorization information, that the first sensing service of the AF/client is authorized.

After determining that the first sensing service of the AF/client is authorized, the NEF network element forwards the sensing request to the GMSC network element.

S406: The GMSC network element sends the sensing request to an AMF network element.

The GMSC network element is responsible for selecting a proper AMF network element for the first sensing service. The AMF network element may be an AMF whose sensing service range includes a sensing area corresponding to a sensing service request. Alternatively, the AMF may be a serving AMF of target object UE or reference UE. The target object UE is a target object that needs to be sensed by the sensing device, and the object is a terminal device (for example, a vehicle equipped with a UE module) or includes a terminal device (for example, a mobile phone carried by a pedestrian). The reference UE is a terminal device required when the sensing device performs the sensing operation on the target object, and may also be referred to as auxiliary UE or sensing UE. The GMSC network element forwards the sensing request to the AMF network element.

S408: The AMF network element sends the sensing request to an SF network element.

S410: The SF network element matches the first sensing service with a first sensing task executed by the sensing device.

The SF network element matches the first sensing service with the first sensing task based on the sensing requirement of the first sensing service and a sensing requirement of the first sensing task. Optionally, the SF network element may further determine the first sensing task with reference to the first information. The first information includes at least one of the following: capability information of at least one sensing device, where the at least one sensing device includes a sensing device executing the first sensing service (the first sensing task), sensing data processing experience information of the SF network element, and assistance information related to the first sensing service; the capability information of the at least one sensing device includes at least one of the following: an available sensing resource, supportable sensing precision, supportable sensing resolution, a supportable sensing distance, a supportable sensing angle, a supportable sensing area, a supportable sensing speed range, an available processing capability, and a hardware configuration of each of the at least one sensing device; the sensing data processing experience information of the SF includes at least one of the following: a detection rate, a missed detection rate, a false alarm rate, and a confidence that correspond to a historical sensing result; and the assistance information related to the first sensing service includes at least one of the following: sensing area related information of the first sensing service, sensing object information of the first sensing service, sensing time related information of the first sensing service, and purpose information of the first sensing service.

S412: The SF network element sends a sensing control message to the sensing device.

This step is optional. If the sensing requirement of the first sensing task does not meet the sensing requirement of the first sensing service, the SF network element may update the sensing requirement of the first sensing task, so that the sensing requirement of the first sensing task meets the sensing requirement of the first sensing service, and trigger, by using the sensing control message to carry an updated sensing requirement of the first sensing task, the sensing device to perform the sensing operation based on the updated sensing requirement.

If the sensing requirement of the first sensing task meets the sensing requirement of the first sensing service, S412 does not need to be implemented, and step S414 is directly performed.

S414: The sensing device performs the sensing operation.

S416: The sensing device sends sensing measurement data to the SF network element.

S418: The SF network element obtains a sensing result based on the sensing measurement data.

S420: The SF network element returns the sensing result to the AMF network element.

Steps S420 to S426 may be performed only after the SF network element analyzes the sensing measurement data and then finds a target object of the first sensing service, and may not be performed if no target object is found, thereby reducing overheads and power consumption caused by data transmission.

S422: The AMF network element sends the sensing result to the GMSC network element.

S424: The GMSC network element sends the sensing result to the NEF network element.

S426: The NEF network element sends the sensing result to the AF/client.

Steps S20 to S426 are consistent with a sending path of the sensing request. In this embodiment of this application, the sensing request may not be sent along the path in the figure. For example, the AF/client forwards the sensing request to the SF network element only through the NEF network element, or the AF/client forwards the sensing request to the SF network element only through the GMSC network element. For details, refer to the descriptions of S210 in FIG. 2. In addition, for related details of FIG. 4, refer to related steps in the embodiment shown in FIG. 2. Details are not described herein again.

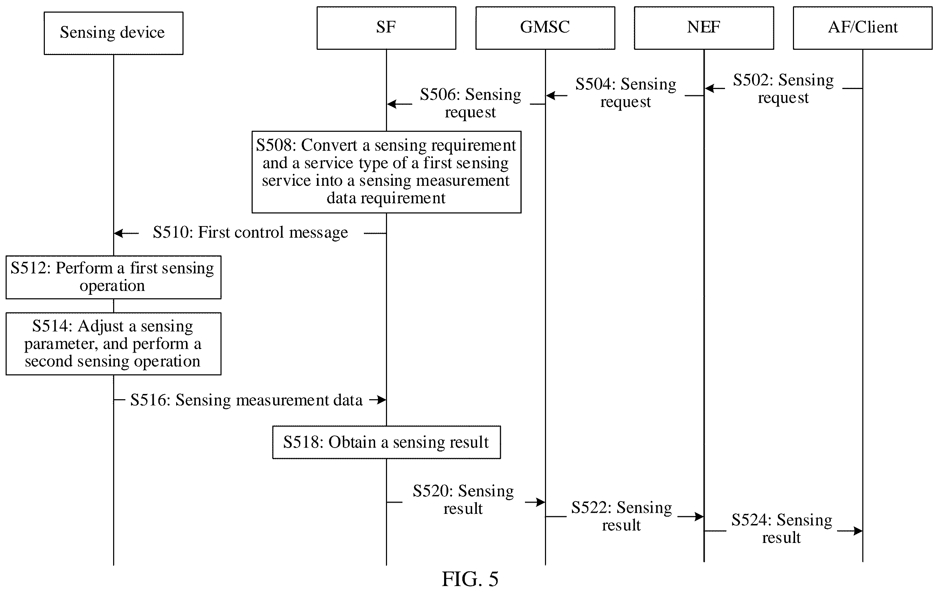

FIG. 5 is a schematic flowchart of another sensing method according to an embodiment of this application. As shown in FIG. 5, the method includes the following steps.

S502: An AF/client sends a sensing request to an NEF network element.

The sensing request may be a request for a first sensing service, and carries a sensing requirement of the first sensing service and service description information of the first sensing service.

S504: The NEF network element sends the sensing request to a GMSC network element.

The NEF network element performs an authorization check on the AF/client, that is, queries whether a first sensing service of the AF/client is authorized. For example, the NEF network element may determine, through a UDM/UDR network element, whether the first sensing service of the AF/client is authorized. Specifically, the NEF network element may obtain subscription information of the AF/client from the UDM/UDR network element. The subscription information includes service authorization information of the AF/client. The NEF network element determines, based on the service authorization information, that the first sensing service of the AF/client is authorized.

After determining that the first sensing service of the AF/client is authorized, the NEF network element forwards the sensing request to the GMSC network element.

S506: The GMSC network element sends the sensing request to an SF network element.

The GMSC network element is responsible for selecting a proper SF network element.

S508: The SF network element converts the service description information of the first sensing service into a sensing measurement data requirement.

The sensing measurement data requirement includes point cloud information and operation information of a target object. The point cloud information of the target object includes at least one of the following: a scattering point location range, a scattering point speed range, a scattering point direction range, a scattering point size, scattering point contour information, and scattering point intensity information, and the operation information includes at least one of the following operations on the target object: target tracking, target recognition, target contour delineation, target collision avoidance recognition, and recognition of entry of a target to a specific area or location.

S510: The SF network element sends a first control message to a sensing device, where the first control message includes the sensing measurement data requirement and the sensing requirement of the first sensing service.

S512: The sensing device performs a first sensing operation based on the first control message.

S514: The sensing device adjusts a sensing parameter, and performs a second sensing operation.

Steps S514 to S524 are optional. When the sensing device finds the target object after analyzing first sensing measurement data obtained through the first sensing operation and the first sensing measurement data obtained by the first sensing operation does not meet the sensing requirement of the first sensing service, S514 to S524 may be performed. Adjusting the sensing parameter may be adjusting at least one of a sensing bandwidth, a transmit power, a beam width, a sensing direction, and a scanning periodicity, to obtain, for the target object, a sensing result that meets a requirement.

Optionally, if the sensing device does not find the target object after analyzing the first sensing measurement data obtained through the first sensing operation, execution of S514 to S524 may be stopped. In other words, the sensing measurement data is not sent to the SF network element.

Optionally, if the sensing device finds the target object by analyzing the first sensing measurement data obtained through the first sensing operation and the first sensing measurement data meets the sensing requirement of the first sensing service, adjusting the sensing parameter in S514 may not be performed, but the first sensing measurement data is directly sent to the AF/client based on steps S516 to S524.

In addition, the sensing device is not limited to adjusting the sensing parameter for only one time as shown in FIG. 5, but may adjust the sensing parameter for a plurality of times, to obtain sensing measurement data that meets the sensing requirement.

S516: The sensing device sends the sensing measurement data to the SF network element.

The sensing measurement data may be sensing measurement data that meets the sensing requirement of the first sensing service and that is obtained by adjusting a sensing parameter of the sensing device by the sensing device, or may be all sensing data obtained by performing sensing for the first sensing service for a plurality of times by the sensing device.

To reduce a data processing amount of the SF network element, indication information may be used for indication when a sensing object corresponding to the sensing measurement data includes the target object. In this way, the SF network element may determine, by using the indication information, that the sensing object corresponding to the sensing measurement data includes the target object, and process and analyze the sensing measurement data.

S518: The SF network element obtains a sensing result based on the sensing measurement data.

S520: The SF network element sends the sensing result to the GMSC network element.

S522: The GMSC network element sends the sensing result to the NEF network element.

S524: The NEF network element sends the sensing result to the AF/client.

In this embodiment of this application, the sensing request may not be sent along the path in the figure. For example, the AF/client forwards the sensing request to the SF network element only through the NEF network element, or the AF/client forwards the sensing request to the SF network element only through the GMSC network element. For details, refer to the descriptions of S210 in FIG. 2. In addition, for related details of FIG. 5, refer to related steps in the embodiment shown in FIG. 3. Details are not described herein again.

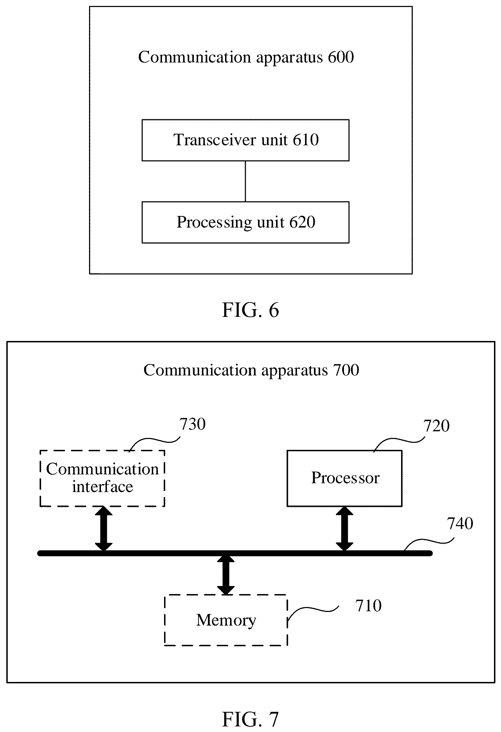

FIG. 6 shows a communication apparatus according to an embodiment of this application. The communication apparatus includes a transceiver unit 610 and a processing unit 620.

In an embodiment, the communication apparatus is a second network element, and the communication apparatus 600 may be configured to perform corresponding steps of the sensing method performed by the second network element in FIG. 2 or FIG. 4. Specifically, the communication apparatus includes: the transceiver unit 610, configured to receive a first request message from a first network element, where the first request message is used to request a first sensing service; and the processing unit 620, configured to determine a first sensing task matching the first sensing service, where the first sensing task is a sensing task executed by a third network element. The transceiver unit 610 is further configured to receive sensing measurement data from the third network element. The sensing measurement data is obtained based on the first sensing task. The processing unit 620 is further configured to obtain a sensing result of the first sensing service based on the sensing measurement data.

The second network element may be a sensing control device, for example, may be a sensing function network element SF. The first network element may be a demander or a requester of a sensing service, for example, may be an application server, a client, an application function network element, a terminal device, or an internal network element. The internal network element may include a base station, an access and mobility management function (access and mobility management, AMF) network element, a location management function (location management function, LMF), or the like. The third network element may be a sensing device network element (sensing execution device), for example, may be a base station or a terminal device.

The first sensing task may be a sensing operation, sensing detection, a sensing service, or the like that is being performed by the third network element.

In this embodiment, after receiving a message for requesting the first sensing service by the first network element, the second network element may match the first sensing service with a first sensing task being executed by the third network element, so that data of the first sensing task may be used for both the first sensing service and another sensing service matched with the first sensing task. Because the second network element matches the first sensing service with the first sensing task being executed, for example, signaling interaction overheads required for establishing a data transmission channel may be reduced.

In this embodiment of this application, the first request message includes a sensing requirement of the first sensing service, and the processing unit 620 is specifically configured to determine, based on a sensing requirement of the first sensing task and the sensing requirement of the first sensing service, the first sensing task matching the first sensing service.

In this embodiment of this application, the sensing requirement of the first sensing service includes at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner; and/or the sensing requirement of the first sensing task includes at least one of the following: first sensing task precision, first sensing task resolution, a first sensing task refresh rate, a first sensing task delay, a first sensing task detection rate, a first sensing task false alarm rate, a first sensing task missed detection rate, a first sensing task confidence, a first sensing task area, first sensing task time information, a first sensing task speed range, a first sensing task location point, a first sensing task distance, a first sensing task priority, a first sensing task dimension indication, and a first sensing task feedback manner.

In this embodiment of this application, the processing unit 620 is specifically configured to determine, based on the sensing requirement of the first sensing task, the sensing requirement of the first sensing service, and first information, the first sensing task matching the first sensing service. The first information includes at least one of the following: capability information of at least one sensing device network element, where the at least one sensing device network element includes the third network element, sensing data processing experience information of the second network element, and assistance information related to the first sensing service; the capability information of the at least one sensing device network element includes at least one of the following: an available sensing resource, supportable sensing precision, supportable sensing resolution, a supportable sensing distance, a supportable sensing angle, a supportable sensing area, a supportable sensing speed range, an available processing capability, and a hardware configuration of each of the at least one sensing device network element; the sensing data processing experience information of the second network element includes at least one of the following: a detection rate, a missed detection rate, a false alarm rate, and a confidence that correspond to a historical sensing result; and the assistance information related to the first sensing service includes at least one of the following: sensing area related information of the first sensing service, sensing object information of the first sensing service, sensing time related information of the first sensing service, and purpose information of the first sensing service.

In this embodiment of this application, metrics in the sensing requirement of the first sensing task meet metrics in the sensing requirement of the first sensing service.

In this embodiment of this application, metrics in the sensing requirement of the first sensing task meet metrics in the sensing requirement of the first sensing service, and the second network element does not need to send the sensing control message to the third network element for the first sensing service, but returns the sensing result of the first sensing service to the first network element based on the sensing measurement data reported by the third network element.

In this embodiment of this application, if a part or all of metrics in the sensing requirement of the first sensing task do not meet a part or all of metrics in the sensing requirement of the first sensing service, the processing unit 620 is further configured to update the sensing requirement of the first sensing task. An updated sensing requirement of the first sensing task meets the sensing requirement of the first sensing service. The transceiver unit 610 is further configured to send the updated sensing requirement of the first sensing task to the third network element, so that the third network element performs a sensing operation based on the updated sensing requirement of the first sensing task and obtains the sensing measurement data.

In this embodiment of this application, the first request message further includes service description information of the first sensing service.

In this embodiment of this application, a sensing object corresponding to the sensing measurement data includes a target object of the first sensing service, the processing unit 620 is further configured to determine a sensing measurement data requirement of the first sensing service based on the service description information. The sensing measurement data requirement includes a point cloud information requirement and operation information of the target object, the point cloud information requirement of the target object includes at least one of the following: a scattering point location range, a scattering point speed range, a scattering point direction range, a scattering point size, scattering point contour information, and scattering point intensity information, and the operation information includes at least one of the following: target tracking, target recognition, target contour delineation, target collision avoidance recognition, and recognition of entry of a target to a specific area or location. The transceiver unit 610 is further configured to send the sensing measurement data requirement to the third network element, so that the third network element obtains the sensing measurement data based on the sensing measurement data requirement.

In this embodiment of this application, the transceiver unit 610 is further configured to receive first indication information from the third network element. The first indication information indicates that the sensing object corresponding to the sensing measurement data includes the target object. The processing unit 620 is specifically configured to obtain the sensing result based on the first indication information and the sensing measurement data.

In another embodiment, the communication apparatus 600 is a second network element, and the communication apparatus 600 may be configured to perform corresponding steps of the sensing method performed by the second network element in FIG. 3 or FIG. 5. The communication apparatus includes: the transceiver unit 610, configured to receive a first request message from a first network element, where the first request message is used to request a first sensing service, and the first request message includes a sensing requirement of the first sensing service and service description information of the first sensing service; and the processing unit 620, configured to determine a sensing measurement data requirement of the first sensing service based on the service description information. The sensing measurement data requirement includes a point cloud information requirement and operation information of the target object, the point cloud information requirement of the target object includes at least one of the following: a scattering point location range, a scattering point speed range, a scattering point direction range, a scattering point size, scattering point contour information, and scattering point intensity information, and the operation information includes at least one of the following: target tracking, target recognition, target contour delineation, target collision avoidance recognition, and recognition of entry of a target to a specific area or location. The transceiver unit 610 is further configured to send a first control message to a third network element. The first control message is used to request the third network element to perform a sensing operation, and the first control message includes the sensing measurement data requirement and the sensing requirement of the first sensing service.

The target recognition may include: determining whether there is the target object, determining a quantity of target objects, and determining a size of the target object. The service description information may include a service type and requirement information for the target object. The requirement information for the target object may be, for example, a speed limit value in vehicle overspeed detection.

The second network element converts the service description information (the service description information may include the service type) of the first sensing service requested by the first network element into a sensing measurement data requirement that can be understood and further processed by a sensing device network element (the third network element), and sends the sensing measurement data requirement and the sensing requirement of the first sensing service to the third network element, so that the third network element can determine, based on the sensing measurement data requirement by parsing the sensing measurement data, that the target object exists, and then can independently adjust the sensing parameter to perform a further sensing operation on a sensing object. In this way, the second network element does not need to indicate, through signaling, the third network element to perform further sensing.

Further, to reduce consumption of sensing resources, the third network element may perform sensing based on a low sensing requirement at the beginning, for example, perform sensing by using a wide beam, to determine the sensing object in a large sensing range as soon as possible. After the sensing measurement data is analyzed and it is determined that the target object exists, further sensing may be performed on the target object based on a sensing parameter that meets the sensing requirement of the first sensing service.

In this embodiment of this application, the transceiver unit 610 is further configured to receive sensing measurement data from the third network element. The sensing measurement data is obtained by the third network element by performing the sensing operation based on the sensing requirement of the first sensing service. The processing unit 620 is further configured to obtain a sensing result based on the sensing measurement data.

In this embodiment of this application, the transceiver unit 610 is further configured to receive first indication information from the third network element. The first indication information indicates whether a sensing object corresponding to the sensing measurement data includes the target object. The processing unit 620 is specifically configured to: if the first indication information indicates that the sensing object corresponding to the sensing measurement data includes the target object, obtain the sensing result based on the sensing measurement data. The transceiver unit 610 is further configured to return the sensing result of the first sensing service to the first network element.

In this embodiment of this application, the sensing requirement of the first sensing service includes at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner.

In still another embodiment, the communication apparatus 600 is a third network element, and the communication apparatus 600 may be configured to perform corresponding steps of the sensing method performed by the third network element in FIG. 3 or FIG. 5, including: The transceiver unit 610 is further configured to receive a first control message from a second network element. The first control message includes a sensing requirement of a first sensing service and a sensing measurement data requirement of the first sensing service, the sensing measurement data requirement includes a point cloud information requirement and operation information of a target object of the first sensing service, the point cloud information requirement of the target object includes at least one of the following: a scattering point location range, a scattering point speed range, a scattering point direction range, a scattering point size, scattering point contour information, and scattering point intensity information, and the operation information includes at least one of the following operations on the target object: target tracking, target recognition, target contour delineation, target collision avoidance recognition, and recognition of entry of a target to a specific area or location. The processing unit 620 is configured to: perform a first sensing operation based on the first control message, and obtain first sensing measurement data; determine whether a sensing object corresponding to the first sensing measurement data includes the target object; if the sensing object corresponding to the first sensing measurement data includes the target object and the first sensing measurement data does not meet the sensing requirement of the first sensing service: adjust a sensing parameter, perform a second sensing operation on the target object, and obtain second sensing measurement data. The transceiver unit 610 is further configured to send the second sensing measurement data to the second network element. Alternatively, if the sensing object corresponding to the first sensing measurement data includes the target object and the first sensing measurement data meets the sensing requirement of the first sensing service: the transceiver unit 610 is further configured to send the first sensing measurement data to the second network element.

The sensing measurement data requirement of the first sensing service is a requirement that can be understood and processed by the third network element. After receiving the sensing measurement data requirement of the first sensing service, the third network element may perform preliminary processing and analysis on the first sensing measurement data obtained by performing the first sensing operation, and determine, based on an analysis result, whether a sensing parameter needs to be adjusted and further sensing needs to be performed. In this way, the second network element does not need to indicate the third network element to perform a subsequent sensing operation on the target object, thereby reducing signaling interaction between the second network element and the third network element.

When the sensing object corresponding to the first sensing measurement data obtained by the third network element by performing the first sensing operation includes the target object, the third network element can independently adjust the sensing parameter and performs further sensing on the target object, to reduce signaling consumption caused by analyzing the sensing measurement data by the second network element. The third network element may send, to the second network element, the second sensing measurement data obtained through further sensing, so that the second network element obtains a sensing result based on the second sensing measurement data, and returns the sensing result to the first network element.

Optionally, the third network element may be not limited to adjusting the sensing parameter for only one time, but may adjust the sensing parameter for a plurality of times, to obtain the sensing measurement data that meets the sensing requirement of the first sensing service.

When the sensing object corresponding to the first sensing measurement data does not include the target object, the third network element may still send the first sensing measurement data to the second network element, so that the second network element performs subsequent processing. Alternatively, the third network element may not process the first sensing measurement data, in other words, does not send the first sensing measurement data to the second network element, thereby reducing overheads of data transmission or signaling interaction between the second network element and the third network element.

In this embodiment of this application, the processing unit 620 is specifically configured to determine, based on whether the sensing object corresponding to the first sensing measurement data includes a sensing object whose scattering point meets the point cloud information requirement, whether the sensing object corresponding to the first sensing measurement data includes the target object.

In this embodiment of this application, the transceiver unit 610 is further configured to send first indication information to the second network element. The first indication information indicates that a sensing object corresponding to the second sensing measurement data includes the target object.

In this embodiment of this application, the sensing parameter includes at least one of the following: a sensing bandwidth, a transmit power, a beam width, a beam direction, and a scanning periodicity parameter. Sensing parameters used for the first sensing operation and the second sensing operation meet at least one of the following: a transmit power used for the first sensing operation is less than a transmit power used for the second sensing operation; a beam width used for the first sensing operation is greater than a beam width used for the second sensing operation; and a scanning periodicity used for the first sensing operation is greater than a scanning periodicity used for the second sensing operation.

In this embodiment of this application, the sensing requirement of the first sensing service includes at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner.

FIG. 7 shows another communication apparatus 700 according to an embodiment of this application. The communication apparatus 700 shown in FIG. 7 may correspond to the communication apparatus described above. The communication apparatus 700 includes a processor 720. In this embodiment of this application, the processor 720 is configured to implement a corresponding control and management operation. For example, the processor 720 is configured to support the communication apparatus 700 to perform the method, the operation, or the function in the foregoing embodiments. Optionally, the communication apparatus 700 may further include a memory 710 and a communication interface 730. The processor 720, the communication interface 730, and the memory 710 may be connected to each other or connected to each other through a bus 740. The communication interface 730 is configured to support the communication apparatus to communicate with another device, and the like. The memory 710 is configured to store program code and data of the communication apparatus. The processor 720 invokes the code or the data stored in the memory 710 to implement a corresponding operation. The memory 710 may be or may not be coupled to the processor. The coupling in embodiments of this application may be an indirect coupling or a communication connection between communication apparatuses, units, or modules in an electrical form, a mechanical form, or another form, and is used for information exchange between the communication apparatuses, the units, or the modules.

The processor 720 may be a central processing unit, a general-purpose processor, a digital signal processor, an application-specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the digital signal processor and a microprocessor. The communication interface 730 may be a transceiver, a circuit, a bus, a module, or another type of communication interface. The bus 740 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 7, but this does not mean that there is only one bus or only one type of bus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical functional division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement, to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes various media that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A sensing method, comprising:
receiving, by a second network element, a first request message from a first network element, wherein the first request message is used to request a first sensing service;
determining, by the second network element, a first sensing task matching the first sensing service, wherein the first sensing task is a sensing task executed by a third network element;
receiving, by the second network element, sensing measurement data from the third network element, wherein the sensing measurement data is obtained based on the first sensing task; and
obtaining, by the second network element, a sensing result of the first sensing service based on the sensing measurement data.

2. The method according to claim 1, wherein the first request message comprises a sensing requirement of the first sensing service, and determining, by the second network element, the first sensing task matching the first sensing service comprises:
determining, by the second network element based on a sensing requirement of the first sensing task and the sensing requirement of the first sensing service, the first sensing task matching the first sensing service.

3. The method according to claim 2, wherein the sensing requirement of the first sensing service comprises at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner; and/or
the sensing requirement of the first sensing task comprises at least one of the following: first sensing task precision, first sensing task resolution, a first sensing task refresh rate, a first sensing task delay, a first sensing task detection rate, a first sensing task false alarm rate, a first sensing task missed detection rate, a first sensing task confidence, a first sensing task area, first sensing task time information, a first sensing task speed range, a first sensing task location point, a first sensing task distance, a first sensing task priority, a first sensing task dimension indication, and a first sensing task feedback manner.

4. The method according to claim 2 or 3, wherein determining, by the second network element based on the sensing requirement of the first sensing task and the sensing requirement of the first sensing service, the first sensing task matching the first sensing service comprises:
determining, by the second network element based on the sensing requirement of the first sensing task, the sensing requirement of the first sensing service, and first information, the first sensing task matching the first sensing service, wherein
the first information comprises at least one of the following: capability information of at least one sensing device network element, wherein the at least one sensing device network element comprises the third network element, sensing data processing experience information of the second network element, and assistance information related to the first sensing service;
the capability information of the at least one sensing device network element comprises at least one of the following: an available sensing resource, supportable sensing precision, supportable sensing resolution, a supportable sensing distance, a supportable sensing angle, a supportable sensing area, a supportable sensing speed range, an available processing capability, and a hardware configuration of each of the at least one sensing device network element;
the sensing data processing experience information of the second network element comprises at least one of the following: a detection rate, a missed detection rate, a false alarm rate, and a confidence that correspond to a historical sensing result; and
the assistance information related to the first sensing service comprises at least one of the following: sensing area related information of the first sensing service, sensing object information of the first sensing service, sensing time related information of the first sensing service, and purpose information of the first sensing service.

5. The method according to any one of claims 2 to 4, wherein metrics in the sensing requirement of the first sensing task meet metrics in the sensing requirement of the first sensing service.

6. The method according to any one of claims 2 to 4, wherein if a part or all of metrics in the sensing requirement of the first sensing task do not meet a part or all of metrics in the sensing requirement of the first sensing service, the method further comprises:
updating, by the second network element, the sensing requirement of the first sensing task, wherein an updated sensing requirement of the first sensing task meets the sensing requirement of the first sensing service; and
sending, by the second network element, the updated sensing requirement of the first sensing task to the third network element, so that the third network element performs a sensing operation based on the updated sensing requirement of the first sensing task and obtains the sensing measurement data.

7. The method according to any one of claims 2 to 6, wherein the first request message further comprises service description information of the first sensing service.

8. The method according to claim 7, wherein a sensing object corresponding to the sensing measurement data comprises a target object of the first sensing service, and the method further comprises:
determining, by the second network element, a sensing measurement data requirement of the first sensing service based on the service description information, wherein the sensing measurement data requirement comprises a point cloud information requirement and operation information of the target object, the point cloud information requirement of the target object comprises at least one of the following: a scattering point location range, a scattering point speed range, a scattering point direction range, a scattering point size, scattering point contour information, and scattering point intensity information, and the operation information comprises at least one of the following: target tracking, target recognition, target contour delineation, target collision avoidance recognition, and recognition of entry of a target to a specific area or location; and
sending, by the second network element, the sensing measurement data requirement to the third network element, so that the third network element obtains the sensing measurement data based on the sensing measurement data requirement.

9. The method according to claim 7, wherein the method further comprises:
receiving, by the second network element, first indication information from the third network element, wherein the first indication information indicates that a sensing object corresponding to the sensing measurement data comprises the target object; and
obtaining, by the second network element, the sensing result of the first sensing service based on the sensing measurement data comprises:
obtaining, by the second network element, the sensing result based on the first indication information and the sensing measurement data.

10. A sensing method, comprising:
receiving, by a second network element, a first request message from a first network element, wherein the first request message is used to request a first sensing service, and the first request message comprises a sensing requirement of the first sensing service and service description information of the first sensing service;
determining, by the second network element, a sensing measurement data requirement of the first sensing service based on the service description information, wherein the sensing measurement data requirement comprises a point cloud information requirement and operation information of a target object of the first sensing service, the point cloud information requirement of the target object comprises at least one of the following: a scattering point location range, a scattering point speed range, a scattering point direction range, a scattering point size, scattering point contour information, and scattering point intensity information, and the operation information comprises at least one of the following: target tracking, target recognition, target contour delineation, target collision avoidance recognition, and recognition of entry of a target to a specific area or location; and
sending, by the second network element, a first control message to a third network element, wherein the first control message is used to request the third network element to perform a sensing operation, and the first control message comprises the sensing measurement data requirement and the sensing requirement of the first sensing service.

11. The method according to claim 10, wherein the method further comprises:
receiving, by the second network element, sensing measurement data from the third network element, wherein the sensing measurement data is obtained by the third network element by performing the sensing operation based on the sensing requirement of the first sensing service; and
obtaining, by the second network element, a sensing result based on the sensing measurement data.

12. The method according to claim 11, wherein the method further comprises:
receiving, by the second network element, first indication information from the third network element, wherein the first indication information indicates whether a sensing object corresponding to the sensing measurement data comprises the target object;
obtaining, by the second network element, the sensing result based on the sensing measurement data comprises:
if the first indication information indicates that the sensing object corresponding to the sensing measurement data comprises the target object, obtaining, by the second network element, the sensing result based on the sensing measurement data; and
the method further comprises: returning, by the second network element, the sensing result of the first sensing service to the first network element.

13. The method according to any one of claims 10 to 12, wherein
the sensing requirement of the first sensing service comprises at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner.

14. A sensing method, comprising:
receiving, by a third network element, a first control message from a second network element, wherein the first control message comprises a sensing requirement of a first sensing service and a sensing measurement data requirement of the first sensing service, the sensing measurement data requirement comprises a point cloud information requirement and operation information of a target object of the first sensing service, the point cloud information requirement of the target object comprises at least one of the following: a scattering point location range, a scattering point speed range, a scattering point direction range, a scattering point size, scattering point contour information, and scattering point intensity information, and the operation information comprises at least one of the following operations on the target object: target tracking, target recognition, target contour delineation, target collision avoidance recognition, and recognition of entry of a target to a specific area or location;
performing, by the third network element, a first sensing operation based on the first control message, and obtaining first sensing measurement data;
determining, by the third network element, whether a sensing object corresponding to the first sensing measurement data comprises the target object; and
if the sensing object corresponding to the first sensing measurement data comprises the target object and the first sensing measurement data does not meet the sensing requirement of the first sensing service:
adjusting, by the third network element, a sensing parameter, performing a second sensing operation on the target object, and obtaining second sensing measurement data, wherein the second sensing measurement data meets the sensing requirement of the first sensing service; and
sending, by the third network element, the second sensing measurement data to the second network element; or
if the sensing object corresponding to the first sensing measurement data comprises the target object and the first sensing measurement data meets the sensing requirement of the first sensing service:
sending, by the third network element, the first sensing measurement data to the second network element.

15. The method according to claim 14, wherein determining, by the third network element, whether the sensing object corresponding to the first sensing measurement data comprises the target object comprises:
determining, by the third network element based on whether the sensing object corresponding to the first sensing measurement data comprises a sensing object whose scattering point meets the point cloud information requirement, whether the sensing object corresponding to the first sensing measurement data comprises the target object.

16. The method according to claim 15, wherein the method further comprises:
sending, by the third network element, first indication information to the second network element, wherein the first indication information indicates that a sensing object corresponding to the second sensing measurement data comprises the target object.

17. The method according to claim 15 or 16, wherein
the sensing parameter comprises at least one of the following: a sensing bandwidth, a transmit power, a beam width, a beam direction, and a scanning periodicity parameter, wherein sensing parameters used for the first sensing operation and the second sensing operation meet at least one of the following:
a transmit power used for the first sensing operation is less than a transmit power used for the second sensing operation;
a beam width used for the first sensing operation is greater than a beam width used for the second sensing operation; and
a scanning periodicity used for the first sensing operation is greater than a scanning periodicity used for the second sensing operation.

18. The method according to any one of claims 14 to 17, wherein
the sensing requirement of the first sensing service comprises at least one of the following: first sensing service precision, first sensing service resolution, a first sensing service refresh rate, a first sensing service delay, a first sensing service detection rate, a first sensing service false alarm rate, a first sensing service missed detection rate, a first sensing service confidence, a first sensing service area, first sensing service time information, a first sensing service speed range, a first sensing service location point, a first sensing service distance, a first sensing service priority, a first sensing service dimension indication, and a first sensing service feedback manner.

19. A communication apparatus, comprising:
a transceiver unit, configured to receive a first request message from a first network element, wherein the first request message is used to request a first sensing service; and
a processing unit, configured to determine a first sensing task matching the first sensing service, wherein the first sensing task is a sensing task executed by a third network element, wherein
the transceiver unit is further configured to receive sensing measurement data from the third network element, wherein the sensing measurement data is obtained based on the first sensing task; and
the processing unit is further configured to obtain a sensing result of the first sensing service based on the sensing measurement data.

20. A communication apparatus, comprising:
a transceiver unit, configured to receive a first request message from a first network element, wherein the first request message is used to request a first sensing service, and the first request message comprises a sensing requirement of the first sensing service and service description information of the first sensing service; and
a processing unit, configured to determine a sensing measurement data requirement of the first sensing service based on the service description information, wherein the sensing measurement data requirement comprises a point cloud information requirement and operation information of a target object of the first sensing service, the point cloud information requirement of the target object comprises at least one of the following: a scattering point location range, a scattering point speed range, a scattering point direction range, a scattering point size, scattering point contour information, and scattering point intensity information, and the operation information comprises at least one of the following: target tracking, target recognition, target contour delineation, target collision avoidance recognition, and recognition of entry of a target to a specific area or location, wherein
the transceiver unit is further configured to send a first control message to a third network element, wherein the first control message is used to request the third network element to perform a sensing operation, and the first control message comprises the sensing measurement data requirement and the sensing requirement of the first sensing service.

21. A communication apparatus, comprising:
a transceiver unit, configured to receive a first control message from a second network element, wherein the first control message comprises a sensing requirement of a first sensing service and a sensing measurement data requirement of the first sensing service, the sensing measurement data requirement comprises a point cloud information requirement and operation information of a target object of the first sensing service, the point cloud information requirement of the target object comprises at least one of the following: a scattering point location range, a scattering point speed range, a scattering point direction range, a scattering point size, scattering point contour information, and scattering point intensity information, and the operation information comprises at least one of the following operations on the target object: target tracking, target recognition, target contour delineation, target collision avoidance recognition, and recognition of entry of a target to a specific area or location; and
a processing unit, configured to:
perform, based on the first control message, a first sensing operation, and obtain first sensing measurement data; and
determine whether a sensing object corresponding to the first sensing measurement data comprises the target object, wherein
if the sensing object corresponding to the first sensing measurement data comprises the target object and the first sensing measurement data does not meet the sensing requirement of the first sensing service:
the processing unit is further configured to: adjust a sensing parameter, perform a second sensing operation on the target object, and obtain second sensing measurement data, wherein the second sensing measurement data meets the sensing requirement of the first sensing service; and
the transceiver unit is further configured to send the second sensing measurement data to the second network element; or
if the sensing object corresponding to the first sensing measurement data comprises the target object and the first sensing measurement data meets the sensing requirement of the first sensing service:
the transceiver unit is further configured to send the first sensing measurement data to the second network element.

22. A communication apparatus, configured to perform the method according to any one of claims 1 to 9; or
configured to perform the method according to any one of claims 10 to 13; or
configured to perform the method according to any one of claims 14 to 18.

23. A communication apparatus, comprising at least one processor, wherein the processor is coupled to a memory, the memory is configured to store instructions, and when the instructions are run by the processor:
the processor is enabled to perform the method according to any one of claims 1 to 9; or
the processor is enabled to perform the method according to any one of claims 10 to 13; or
the processor is enabled to perform the method according to any one of claims 14 to 18.

24. A computer-readable storage medium, storing computer-executable instructions, wherein when the computer-executable instructions are run on a computer, the computer is enabled to perform the method according to any one of claims 1 to 9, or the computer is enabled to perform the method according to any one of claims 10 to 13, or the computer is enabled to perform the method according to any one of claims 14 to 18.

25. A computer program product, wherein the computer program product comprises computer program code, and when the computer program code is run, the method according to any one of claims 1 to 9 is implemented, the method according to any one of claims 10 to 13 is implemented, or the method according to claim 14 to 18 is implemented.
